# EUROPEAN PATENT APPLICATION

(11) **EP 4 629 740 A1**
(43) Date of publication of application: **08.10.2025**
(21) Application number: 23905972.8
(22) Date of filing: 20.12.2023
(51) Int. Cl.: H04W 76/11, H04W 84/12

(54) **COMMUNICATION METHOD AND COMMUNICATION APPARATUS**

(30) Priority: 20.12.2022 CN 202211640825
(71) Applicant: Huawei Technologies Co., Ltd., Shenzhen, Guangdong 518129 (CN)
(72) Inventor: HUANG, Guogang, Shenzhen, Guangdong 518129 (CN); GAN, Ming, Shenzhen, Guangdong 518129 (CN); LI, Yunbo, Shenzhen, Guangdong 518129 (CN); GUO, Yuchen, Shenzhen, Guangdong 518129 (CN)
(74) Representative: Maiwald GmbH
(86) International application number: PCT/CN2023/140033
(87) International publication number: WO 2024/131809

(57) **Abstract**

This application relates to the communication field, and in particular, to a communication method and apparatus. This solution may be applied to a WLAN system that supports 802.11 series protocols such as a next-generation Wi-Fi protocol of IEEE 802.11ax like 802.11be, Wi-Fi 7, or EHT, and a next-generation protocol of 802.11be like Wi-Fi 8, and may be further applied to a UWB-based wireless personal area network system and a sensing system. In the method, a first station of a first multi-link device exchanges a TDLS setup request frame and a TDLS setup response frame with a first station of a second multi-link device via a first access point. The TDLS setup request frame is used to request to set up a first TDLS direct link and a second TDLS direct link. In this way, a plurality of TDLS direct links can be set up between two multi-link devices. Because the plurality of links may be used to transmit information, communication efficiency can be improved.

## Description

This application claims priority to Chinese Patent Application No. 202211640825.0, filed with the China National Intellectual Property Administration on December 20, 2022, and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and a communication apparatus.

### BACKGROUND

Tunneled direct link setup (tunneled direct link setup, TDLS) is a device-to-device (device-to-device, D2D) communication manner. With assistance of an associated access point (access point, AP), two non-AP stations (non-access point stations, non-AP STAs) in a same BSS may set up a TDLS direct link. After the TDLS direct link is successfully set up, the two non-AP stations can directly send data to each other without using the AP. In this way, a transmission rate can be increased, and a communication delay can be reduced.

TDLS is applied to a multi-link device (multi-link device, MLD), and a TDLS direct link may also be set up between two non-AP MLDs that belong to a same BSS. However, currently, a quantity of TDLS direct links that can be set up between two non-AP multi-link devices that belong to a same BSS is limited. This is not conducive to efficiency of communication between the non-AP multi-link devices.

### SUMMARY

This application provides a communication method and a communication apparatus, to set up at least two TDLS direct links between non-access point multi-link devices, so as to improve transmission efficiency.

According to a first aspect, a communication method is provided. The method may be performed by a first multi-link device, or may be performed by a component (for example, a chip, a circuit, or a module) configured in the first multi-link device. This is not limited in this application. The following uses an example in which the method is performed by the first multi-link device.

The method includes: A first station of the first multi-link device sends a tunneled direct link setup TDLS setup request frame to a first station of a second multi-link device via a first access point, where the TDLS setup request frame is used to request to set up a first TDLS direct link and a second TDLS direct link, and both the first station of the first multi-link device and the first station of the second multi-link device are associated with the first access point; and the first station of the first multi-link device receives a TDLS setup response frame from the first station of the second multi-link device via the first access point.

Based on the foregoing solution, a plurality of TDLS direct links may be set up between the first multi-link device and the second multi-link device, and all the plurality of TDLS direct links may be used to transmit information between the multi-link devices, to improve communication efficiency.

Optionally, the TDLS setup response frame responds to the TDLS setup request frame.

Optionally, the TDLS setup response frame indicates whether the first TDLS direct link and the second TDLS direct link are successfully set up.

Optionally, the method may further include: The first station of the first multi-link device sends a TDLS setup confirm frame to the first station of the second multi-link device via the first access point.

With reference to the first aspect, in some implementations of the first aspect, the first TDLS direct link is a direct link between the first station of the first multi-link device and the first station of the second multi-link device, and the second TDLS direct link is a direct link between a second station of the first multi-link device and a second station of the second multi-link device. The second station of the first multi-link device and the second station of the second multi-link device are associated with different access points or are not associated with any access point.

In other words, when two ends of only one of TDLS links to be set up are members belonging to a same BSS, a plurality of TDLS direct links can also be set up between two non-AP multi-link devices.

With reference to the first aspect, in some implementations of the first aspect, the method further includes: The first station of the first multi-link device indicates a link identifier of the first TDLS direct link and a link identifier of the second TDLS direct link to the first station of the second multi-link device via the first access point.

Based on the foregoing solution, link identifiers may be indicated for a plurality of set up links, to help distinguish between different links and ensure communication performance.

With reference to the first aspect, in some implementations of the first aspect, the TDLS setup request frame includes an address of an AP associated with the first station of the first multi-link device and an address of an AP associated with the second station of the first multi-link device.

With reference to the first aspect, in some implementations of the first aspect, the TDLS setup request frame further indicates channel information of the second TDLS direct link, and the channel information includes at least one of the following: an operating class, a channel number, channel bandwidth, a channel center frequency segment 0, a channel center frequency segment 1, and a channel puncture bitmap.

Based on the foregoing solution, in a TDLS direct link setup process, the channel information may be further negotiated for the second TDLS direct link. In this way, signaling exchange can be reduced, and TDLS direct link setup efficiency can be improved.

With reference to the first aspect, in some implementations of the first aspect, the method further includes: The first multi-link device sends a TDLS channel switch request frame to the second multi-link device through the first TDLS direct link, where the channel switch request frame includes link identifier information of the second TDLS direct link.

With reference to the first aspect, in some implementations of the first aspect, a timing synchronization function TSF of the second TDLS direct link is the same as a TSF of the first TDLS direct link.

Because stations at two ends of the second TDLS direct link do not belong to a same BSS, a unified TSF cannot be determined. In this application, a reference link for the TSF may be set for the second TDLS direct link, to implement the timing synchronization function of the second TDLS direct link.

With reference to the first aspect, in some implementations of the first aspect, the first TDLS direct link is a direct link between the first station of the first multi-link device and the first station of the second multi-link device, and the second TDLS direct link is a direct link between the second station of the first multi-link device and the second station of the second multi-link device. The second station of the first multi-link device and the second station of the second multi-link device are associated with a same access point.

Based on the foregoing solution, a plurality of set up links in this application may be of a same link type, or may be of different link types, so that this application is applicable to different scenarios, and has higher flexibility.

With reference to the first aspect, in some implementations of the first aspect, the first access point is affiliated with a third multi-link device, the TDLS setup request frame is further used to request to set up a third TDLS direct link, and the third TDLS direct link is a direct link between a third station of the first multi-link device and a third station of the second multi-link device. Both the third station of the first multi-link device and the third station of the second multi-link device are associated with a second access point, and the second access point is affiliated with the third multi-link device.

Based on the foregoing solution, a plurality of links can be set up in this application, so that more scenarios can be used, and flexibility is high.

With reference to the first aspect, in some implementations of the first aspect, the TDLS setup response frame further indicates whether the third TDLS direct link is successfully set up.

With reference to the first aspect, in some implementations of the first aspect, the first multi-link device indicates, to the second multi-link device, that the TSF of the second TDLS direct link is the same as the TSF of the first TDLS direct link or a TSF of the third TDLS direct link.

With reference to the first aspect, in some implementations of the first aspect, the first multi-link device sends a first frame to the second multi-link device, where the first frame is used to wake up at least one of all TDLS direct links between the first multi-link device and the second multi-link device, and all the TDLS direct links include the first TDLS direct link and the second TDLS direct link.

Based on the foregoing solution, in this application, the TDLS direct link between the first multi-link device and the second multi-link device may be woken up through negotiation by using the first frame and a third frame. The TDLS direct link may be all or a part of TDLS direct links between the first multi-link device and the second multi-link device. In this way, when a plurality of TDLS direct link are set up, a power save mechanism can still be supported. This helps the multi-link device save power.

The first frame may be a TDLS peer power save management request frame or a TDLS peer traffic indication frame.

With reference to the first aspect, in some implementations of the first aspect, the first frame is used to wake up all the TDLS direct links between the first multi-link device and the second multi-link device.

Based on the foregoing solution, the first frame can directly wake up all the TDLS direct links between the first multi-link device and the second multi-link device. This is simple and efficient.

Optionally, the first frame includes link identifier information corresponding to a link referenced by the TSF, and the TSF is used to determine first awake windows of all links.

With reference to the first aspect, in some implementations of the first aspect, the first frame is used to wake up at least one link between the first multi-link device and the second multi-link device.

Based on the foregoing solution, the first frame may alternatively wake up a specified TDLS direct link between the first multi-link device and the second multi-link device. This helps improve power save effect of the multi-link device.

In a manner, the first frame includes a link identifier of the at least one woken-up link.

Optionally, the first frame includes a link identifier corresponding to a link referenced by the TSF, and the TSF is used to determine a first awake window of at least one link.

In another manner, the first frame indicates that a first access category AC has buffered data, and there is a mapping relationship between the first access category and the at least one link.

For example, that there is the mapping relationship between the first access category and the at least one link includes: The first access category is mapped to a traffic identifier TID, and the at least one link is mapped to traffic of the TID.

In still another manner, the first frame is used to wake up a fourth TDLS direct link, and the fourth TDLS direct link is one of all the TDLS direct links.

In other words, the first frame is used to wake up a TDLS direct link.

Optionally, the method further includes: The first multi-link device sends a second frame to the second multi-link device during an awake window of the fourth TDLS direct link, where the second frame is used to wake up at least one link other than the fourth TDLS direct link in all the TDLS direct links.

For example, the link referenced by the TSF is the fourth TDLS direct link, and the TSF is used to determine a first awake window of the fourth TDLS direct link.

According to a second aspect, a communication method is provided. The method may be performed by a second multi-link device, or may be performed by a component (for example, a chip, a circuit, or a module) configured in the second multi-link device. This is not limited in this application. The following uses an example in which the method is performed by the second multi-link device.

The method includes: A first station of the second multi-link device receives a TDLS setup request frame from a first station of a first multi-link device via a first access point, where the TDLS setup request frame is used to request to set up a first TDLS direct link and a second TDLS direct link, and both the first station of the first multi-link device and the first station of the second multi-link device are associated with the first access point; and the first station of the second multi-link device sends a TDLS setup response frame to the first station of the first multi-link device via the first access point.

Optionally, the TDLS setup response frame responds to the TDLS setup request frame.

Optionally, the TDLS setup response frame indicates whether the first TDLS direct link and the second TDLS direct link are successfully set up.

Optionally, the method may further include: The first station of the second multi-link device sends a TDLS setup confirm frame to the first station of the first multi-link device via the first access point.

With reference to the second aspect, in some implementations of the second aspect, the first TDLS direct link is a direct link between the first station of the first multi-link device and the first station of the second multi-link device, and the second TDLS direct link is a direct link between a second station of the first multi-link device and a second station of the second multi-link device. The second station of the first multi-link device and the second station of the second multi-link device are associated with different access points or are not associated with any access point.

Optionally, the method further includes: The first station of the second multi-link device receives a link identifier of the first TDLS direct link and a link identifier of the second TDLS direct link from the first station of the second multi-link device via the first access point.

For example, the TDLS setup response frame includes an address of an AP associated with the first station of the second multi-link device and an address of an AP associated with the second station of the second multi-link device.

With reference to the second aspect, in some implementations of the second aspect, the TDLS setup request frame further indicates channel information of the second TDLS direct link, and the channel information includes at least one of the following: an operating class, a channel number, channel bandwidth, a channel center frequency segment 0, a channel center frequency segment 1, and a channel puncture bitmap.

With reference to the second aspect, in some implementations of the second aspect, the method further includes: The second multi-link device receives a TDLS channel switch request frame from the first multi-link device through the first TDLS direct link, where the channel switch request frame includes link identifier information of the second TDLS direct link.

For example, a timing synchronization function TSF of the second TDLS direct link is the same as a TSF of the first TDLS direct link.

With reference to the second aspect, in some implementations of the second aspect, the first TDLS direct link is a direct link between the first station of the first multi-link device and the first station of the second multi-link device, and the second TDLS direct link is a direct link between the second station of the first multi-link device and the second station of the second multi-link device. The second station of the first multi-link device and the second station of the second multi-link device are associated with a same access point.

With reference to the second aspect, in some implementations of the second aspect, the first access point is affiliated with a third multi-link device, the TDLS setup request frame is further used to request to set up a third TDLS direct link, and the third TDLS direct link is a direct link between a third station of the first multi-link device and a third station of the second multi-link device. Both the third station of the first multi-link device and the third station of the second multi-link device are associated with a second access point, and the second access point is affiliated with the third multi-link device.

Optionally, the TDLS setup response frame further indicates whether the third TDLS direct link is successfully set up.

With reference to the second aspect, in some implementations of the second aspect, the second multi-link device receives indication information from the first multi-link device, and the indication information indicates that the TSF of the second TDLS direct link is the same as the TSF of the first TDLS direct link or a TSF of the third TDLS direct link.

With reference to the second aspect, in some implementations of the second aspect, the method further includes: The second multi-link device receives a first frame from the first multi-link device, where the first frame is used to wake up at least one of all TDLS direct links between the first multi-link device and the second multi-link device, and all the TDLS direct links include the first TDLS direct link and the second TDLS direct link.

The first frame may be a TDLS peer power save management request frame or a TDLS peer traffic indication frame.

With reference to the second aspect, in some implementations of the second aspect, the first frame is used to wake up all the TDLS direct links between the first multi-link device and the second multi-link device.

Optionally, the first frame includes link identifier information corresponding to a link referenced by the TSF, and the TSF is used to determine first awake windows of all links.

With reference to the second aspect, in some implementations of the second aspect, the first frame is used to wake up at least one link between the first multi-link device and the second multi-link device.

In a manner, the first frame further includes a link identifier of the at least one woken-up link.

In another manner, the first frame further indicates that a first access category AC has buffered data, there is a mapping relationship between the first access category and the at least one link, and the method further includes: The second multi-link device determines the at least one link based on the first frame and the first access category.

For example, that there is the mapping relationship between the first access category and the at least one link includes: The first access category is mapped to a traffic identifier TID, and the at least one link is mapped to traffic of the TID.

In still another manner, the first frame is used to wake up a fourth TDLS direct link, and the fourth TDLS direct link is one of all the TDLS direct links.

In other words, the first frame is used to wake up a TDLS direct link.

Optionally, the method further includes: The second multi-link device receives a second frame from the first multi-link device through the fourth TDLS direct link, where the second frame is used to wake up at least one link other than the fourth TDLS direct link in all the TDLS direct links.

For example, the link referenced by the TSF is the fourth TDLS direct link, and the TSF is used to determine a first awake window of the fourth TDLS direct link.

It should be understood that, for beneficial effect of the second aspect and the possible implementations of the second aspect, refer to the first aspect and the possible implementations of the first aspect. Details are not described herein again.

According to a third aspect, a communication method is provided. The method may be performed by a first multi-link device, or may be performed by a component (for example, a chip, a circuit, or a module) configured in the first multi-link device. This is not limited in this application. The following uses an example in which the method is performed by the first multi-link device.

The method includes: The first multi-link device sends a TDLS setup request frame to a second multi-link device via a first access point, where the TDLS setup request frame indicates channel information of a second TDLS direct link, the channel information includes at least one of the following: an operating class, a channel number, channel bandwidth, a channel center frequency segment 0, a channel center frequency segment 1, and a channel puncture bitmap, both a first station of the first multi-link device and a first station of the second multi-link device are associated with the first access point, the second TDLS direct link is a direct link between a second station of the first multi-link device and a second station of the second multi-link device, and the second station of the first multi-link device and the second station of the second multi-link device are associated with different access points or are not associated with any access point; and the first multi-link device receives a TDLS setup response frame from the second multi-link device via the first access point, where the TDLS setup response frame responds to the TDLS setup request frame.

Based on the foregoing solution, in a TDLS direct link setup process, the channel information may be negotiated for the second TDLS direct link. In this way, signaling exchange can be reduced, and TDLS direct link setup efficiency can be improved.

Optionally, the TDLS setup response frame includes channel information of the second TDLS direct link, and the channel information of the second TDLS direct link in the TDLS setup request frame is the same as or different from the channel information of the second TDLS direct link in the TDLS setup response frame.

In other words, the TDLS setup request frame and the TDLS setup response frame are used to negotiate the channel information of the second TDLS direct link.

With reference to the third aspect, in some implementations of the third aspect, the TDLS setup request frame is further used to request to set up a first TDLS direct link and the second TDLS direct link, and the first TDLS direct link is a direct link between the first station of the first multi-link device and the first station of the second multi-link device.

According to a fourth aspect, a communication method is provided. The method may be performed by a second multi-link device, or may be performed by a component (for example, a chip, a circuit, or a module) configured in the second multi-link device. This is not limited in this application. The following uses an example in which the method is performed by the second multi-link device.

The method includes: The second multi-link device receives a TDLS setup request frame from a first multi-link device via a first access point, where the TDLS setup request frame indicates channel information of the second TDLS direct link, the channel information includes at least one of the following: an operating class, a channel number, channel bandwidth, a channel center frequency segment 0, a channel center frequency segment 1, and a channel puncture bitmap, both a first station of the first multi-link device and a first station of the second multi-link device are associated with the first access point, the second TDLS direct link is a direct link between a second station of the first multi-link device and a second station of the second multi-link device, and the second station of the first multi-link device and the second station of the second multi-link device are associated with different access points or are not associated with any access point; and the second multi-link device sends a TDLS setup response frame to the first multi-link device via the first access point, where the TDLS setup response frame responds to the TDLS setup request frame.

Optionally, the TDLS setup response frame includes channel information of the second TDLS direct link, and the channel information of the second TDLS direct link in the TDLS setup request frame is the same as or different from the channel information of the second TDLS direct link in the TDLS setup response frame.

In other words, the TDLS setup request frame and the TDLS setup response frame are used to negotiate the channel information of the second TDLS direct link.

With reference to the fourth aspect, in some implementations of the fourth aspect, the TDLS setup request frame is further used to request to set up a first TDLS direct link and the second TDLS direct link, and the first TDLS direct link is a direct link between the first station of the first multi-link device and the first station of the second multi-link device.

According to a fifth aspect, a communication method is provided. The method may be performed by a first multi-link device, or may be performed by a component (for example, a chip, a circuit, or a module) configured in the first multi-link device. This is not limited in this application. The following uses an example in which the method is performed by the first multi-link device.

The method includes: The first multi-link device sends a first frame to a second multi-link device, where the first frame is used to wake up at least one of all TDLS direct links between the first multi-link device and the second multi-link device; and the first multi-link device receives a third frame from the second multi-link device, where the third frame responds to the first frame.

The first frame is a TDLS peer power save management request frame or a TDLS peer traffic indication frame. The third frame is a TDLS peer power save management response frame or a TDLS peer traffic response frame.

Optionally, all the TDLS direct links include a first TDLS direct link and a second TDLS direct link. The first TDLS direct link is a direct link between a first station of the first multi-link device and a first station of the second multi-link device, and the second TDLS direct link is a direct link between a second station of the first multi-link device and a second station of the second multi-link device.

Optionally, both the first station of the first multi-link device and the first station of the second multi-link device are associated with a first access point, and the second station of the first multi-link device and the second station of the second multi-link device are associated with different access points or are not associated with any access point.

Based on the foregoing solution, in this application, the TDLS direct link between the first multi-link device and the second multi-link device may be woken up through negotiation by using the first frame and the third frame. The TDLS direct link may be all or a part of TDLS direct links between the first multi-link device and the second multi-link device. In this way, when a plurality of TDLS direct link are set up, a power save mechanism can still be supported. This helps the multi-link device save power.

With reference to the fifth aspect, in some implementations of the fifth aspect, the first frame is used to wake up all the TDLS direct links between the first multi-link device and the second multi-link device.

Based on the foregoing solution, the first frame can directly wake up all the TDLS direct links between the first multi-link device and the second multi-link device. This is simple and efficient.

Optionally, the first frame includes link identifier information corresponding to a link referenced by a TSF, and the TSF is used to determine first awake windows of all links.

With reference to the fifth aspect, in some implementations of the fifth aspect, the first frame is used to wake up at least one link between the first multi-link device and the second multi-link device.

Based on the foregoing solution, the first frame may alternatively wake up a specified TDLS direct link between the first multi-link device and the second multi-link device. This helps improve power save effect of the multi-link device.

In a manner, the first frame includes a link identifier of the at least one woken-up link.

Optionally, the first frame includes a link identifier corresponding to a link referenced by a TSF, and the TSF is used to determine a first awake window of at least one link.

In another manner, the first frame indicates that a first access category AC has buffered data, and there is a mapping relationship between the first access category and the at least one link.

For example, that there is the mapping relationship between the first access category and the at least one link includes: The first access category is mapped to a traffic identifier TID, and the at least one link is mapped to traffic of the TID.

In still another manner, the first frame is used to wake up a fourth TDLS direct link, and the fourth TDLS direct link is one of all the TDLS direct links.

In other words, the first frame is used to wake up a TDLS direct link.

Optionally, in this manner, the method further includes: The first multi-link device sends the second frame to the second multi-link device during an awake window of the fourth TDLS direct link, where the second frame is used to wake up at least one link other than the fourth TDLS direct link in all the TDLS direct links.

For example, the link referenced by the TSF is the fourth TDLS direct link, and the TSF is used to determine a first awake window of the fourth TDLS direct link.

According to a sixth aspect, a communication method is provided. The method may be performed by a second multi-link device, or may be performed by a component (for example, a chip, a circuit, or a module) configured in the second multi-link device. This is not limited in this application. The following uses an example in which the method is performed by the second multi-link device.

The method includes: The second multi-link device receives a first frame from a first multi-link device, where the first frame is used to wake up at least one of all TDLS direct links between the first multi-link device and the second multi-link device; and the second multi-link device sends a third frame to the first multi-link device, where the third frame responds to the first frame.

The first frame is a TDLS peer power save management request frame or a TDLS peer traffic indication frame. The third frame is a TDLS peer power save management response frame or a TDLS peer traffic response frame.

Optionally, all the TDLS direct links include a first TDLS direct link and a second TDLS direct link. The first TDLS direct link is a direct link between a first station of the first multi-link device and a first station of the second multi-link device, and the second TDLS direct link is a direct link between a second station of the first multi-link device and a second station of the second multi-link device.

Optionally, both the first station of the first multi-link device and the first station of the second multi-link device are associated with a first access point, and the second station of the first multi-link device and the second station of the second multi-link device are associated with different access points or are not associated with any access point.

With reference to the sixth aspect, in some implementations of the sixth aspect, the first frame is used to wake up all the TDLS direct links between the first multi-link device and the second multi-link device.

Optionally, the first frame includes link identifier information corresponding to a link referenced by a TSF, and the TSF is used to determine first awake windows of all links.

With reference to the sixth aspect, in some implementations of the sixth aspect, the first frame is used to wake up at least one link between the first multi-link device and the second multi-link device.

In a manner, the first frame further includes a link identifier of the at least one woken-up link.

In another manner, the first frame further indicates that a first access category AC has buffered data, there is a mapping relationship between the first access category and the at least one link, and the method further includes: The second multi-link device determines the at least one link based on the first frame and the first access category.

For example, that there is the mapping relationship between the first access category and the at least one link includes: The first access category is mapped to a traffic identifier TID, and the at least one link is mapped to traffic of the TID.

In still another manner, the first frame is used to wake up a fourth TDLS direct link, and the fourth TDLS direct link is one of all the TDLS direct links.

In other words, the first frame is used to wake up a TDLS direct link.

Optionally, the method further includes: The second multi-link device receives a second frame from the first multi-link device through the fourth TDLS direct link, where the second frame is used to wake up at least one link other than the fourth TDLS direct link in all the TDLS direct links.

For example, the link referenced by the TSF is the fourth TDLS direct link, and the TSF is used to determine a first awake window of the fourth TDLS direct link.

According to a seventh aspect, a communication apparatus is provided. The apparatus may be a first multi-link device, or may be a component (for example, a chip, a circuit, or a module) configured in the first multi-link device. This is not limited in this application.

The apparatus includes a transceiver unit. The transceiver unit is configured to send a tunneled direct link setup TDLS setup request frame to a first station of a second multi-link device via a first access point, where the TDLS setup request frame is used to request to set up a first TDLS direct link and a second TDLS direct link, and both a first station of the apparatus and the first station of the second multi-link device are associated with a first access point. The transceiver unit is further configured to receive a TDLS setup response frame from the first station of the second multi-link device via the first access point.

With reference to the seventh aspect, in some implementations of the seventh aspect, the first TDLS direct link is a direct link between the first station of the apparatus and the first station of the second multi-link device, and the second TDLS direct link is a direct link between a second station of the apparatus and a second station of the second multi-link device. The second station of the apparatus and the second station of the second multi-link device are associated with different access points or are not associated with any access point.

With reference to the seventh aspect, in some implementations of the seventh aspect, the transceiver unit is further configured to indicate a link identifier of the first TDLS direct link and a link identifier of the second TDLS direct link to the first station of the second multi-link device via the first access point.

With reference to the seventh aspect, in some implementations of the seventh aspect, the TDLS setup request frame includes an address of an AP associated with the first station of the apparatus and an address of an AP associated with the second station of the apparatus.

With reference to the seventh aspect, in some implementations of the seventh aspect, the TDLS setup request frame further indicates channel information of the second TDLS direct link, and the channel information includes at least one of the following: an operating class, a channel number, channel bandwidth, a channel center frequency segment 0, a channel center frequency segment 1, and a channel puncture bitmap.

With reference to the seventh aspect, in some implementations of the seventh aspect, the transceiver unit is further configured to send a TDLS channel switch request frame to the second multi-link device through the first TDLS direct link, where the channel switch request frame includes link identifier information of the second TDLS direct link.

With reference to the seventh aspect, in some implementations of the seventh aspect, a timing synchronization function TSF of the second TDLS direct link is the same as a TSF of the first TDLS direct link.

With reference to the seventh aspect, in some implementations of the seventh aspect, the transceiver unit is further configured to: send a first frame to the second multi-link device, where the first frame is used to wake up at least one of all TDLS direct links between the apparatus and the second multi-link device, and all the TDLS direct links include the first TDLS direct link and the second TDLS direct link.

With reference to the seventh aspect, in some implementations of the seventh aspect, the first frame includes a link identifier of the at least one link.

With reference to the seventh aspect, in some implementations of the seventh aspect, the first frame further indicates that a first access category AC has buffered data, and there is a mapping relationship between the first access category and the at least one link.

With reference to the seventh aspect, in some implementations of the seventh aspect, that there is the mapping relationship between the first access category and the at least one link includes: The first access category is mapped to a traffic identifier TID, and the at least one link is mapped to traffic of the TID.

With reference to the seventh aspect, in some implementations of the seventh aspect, the first frame is used to wake up a fourth TDLS direct link, and the fourth TDLS direct link is one of all the TDLS direct links.

With reference to the seventh aspect, in some implementations of the seventh aspect, the transceiver unit is further configured to send a second frame to the second multi-link device during an awake window of the fourth TDLS direct link, where the second frame is used to wake up at least one link other than the fourth TDLS direct link in all the TDLS direct links.

According to an eighth aspect, a communication apparatus is provided. The apparatus may be a second multi-link device, or may be a component (for example, a chip, a circuit, or a module) configured in the second multi-link device. This is not limited in this application.

The apparatus includes a transceiver unit. The transceiver unit is configured to receive a TDLS setup request frame from a first station of a first multi-link device via a first access point, where the TDLS setup request frame is used to request to set up a first TDLS direct link and a second TDLS direct link, and both the first station of the first multi-link device and a first station of the apparatus are associated with the first access point. The transceiver unit is further configured to send a TDLS setup response frame to the first station of the first multi-link device via the first access point.

With reference to the eighth aspect, in some implementations of the eighth aspect, the first TDLS direct link is a direct link between the first station of the first multi-link device and the first station of the apparatus, and the second TDLS direct link is a direct link between a second station of the first multi-link device and a second station of the apparatus. The second station of the first multi-link device and the second station of the apparatus are associated with different access points or are not associated with any access point.

With reference to the eighth aspect, in some implementations of the eighth aspect, the transceiver unit is further configured to receive a link identifier of the first TDLS direct link and a link identifier of the second TDLS direct link from the first station of the first multi-link device via the first access point.

With reference to the eighth aspect, in some implementations of the eighth aspect, the TDLS setup response frame includes an address of an AP associated with the first station of the apparatus and an address of an AP associated with the second station of the apparatus.

With reference to the eighth aspect, in some implementations of the eighth aspect, the TDLS setup request frame further indicates channel information of the second TDLS direct link, and the channel information includes at least one of the following: an operating class, a channel number, channel bandwidth, a channel center frequency segment 0, a channel center frequency segment 1, and a channel puncture bitmap.

With reference to the eighth aspect, in some implementations of the eighth aspect, the transceiver unit is further configured to receive a TDLS channel switch request frame from the first multi-link device through the first TDLS direct link, where the channel switch request frame includes link identifier information of the second TDLS direct link.

With reference to the eighth aspect, in some implementations of the eighth aspect, a timing synchronization function TSF of the second TDLS direct link is the same as a TSF of the first TDLS direct link.

With reference to the eighth aspect, in some implementations of the eighth aspect, the transceiver unit is further configured to receive a first frame from the first multi-link device, where the first frame is used to wake up at least one of all TDLS direct links between the first multi-link device and the apparatus, and all the TDLS direct links include the first TDLS direct link and the second TDLS direct link.

Optionally, the first frame further includes a link identifier of the at least one woken-up link.

With reference to the eighth aspect, in some implementations of the eighth aspect, the first frame further indicates that a first access category AC has buffered data, and there is a mapping relationship between the first access category and the at least one link. The apparatus further includes a processing unit, configured to determine the at least one link based on the first frame.

With reference to the eighth aspect, in some implementations of the eighth aspect, that there is the mapping relationship between the first access category and the at least one link includes: The first access category is mapped to a traffic identifier TID, and the at least one link is mapped to traffic of the TID.

With reference to the eighth aspect, in some implementations of the eighth aspect, the first frame is used to wake up a fourth TDLS direct link, and the fourth TDLS direct link is one of all the TDLS direct links.

With reference to the eighth aspect, in some implementations of the eighth aspect, the transceiver unit is further configured to receive a second frame from the first multi-link device through the fourth TDLS direct link, where the second frame is used to wake up at least one link other than the fourth TDLS direct link in all the TDLS direct links.

According to a ninth aspect, a communication apparatus is provided. The apparatus may be a first multi-link device, or may be a component (for example, a chip, a circuit, or a module) configured in the first multi-link device. This is not limited in this application.

The apparatus includes a transceiver unit. The transceiver unit is configured to send a TDLS setup request frame to a second multi-link device via a first access point, where the TDLS setup request frame indicates channel information of a second TDLS direct link, the channel information includes at least one of the following: an operating class, a channel number, channel bandwidth, a channel center frequency segment 0, a channel center frequency segment 1, and a channel puncture bitmap, both a first station of the apparatus and a first station of the second multi-link device are associated with the first access point, the second TDLS direct link is a direct link between a second station of the first multi-link device and a second station of the second multi-link device, and the second station of the apparatus and the second station of the second multi-link device are associated with different access points or are not associated with any access point. The transceiver unit is further configured to receive a TDLS setup response frame from the second multi-link device via the first access point, where the TDLS setup response frame responds to the TDLS setup request frame.

Optionally, the TDLS setup response frame includes channel information of the second TDLS direct link, and the channel information of the second TDLS direct link in the TDLS setup request frame is the same as or different from the channel information of the second TDLS direct link in the TDLS setup response frame.

In other words, the TDLS setup request frame and the TDLS setup response frame are used to negotiate the channel information of the second TDLS direct link.

With reference to the ninth aspect, in some implementations of the ninth aspect, the TDLS setup request frame is further used to request to set up a first TDLS direct link and the second TDLS direct link, and the first TDLS direct link is a direct link between the first station of the apparatus and the first station of the second multi-link device.

According to a tenth aspect, a communication apparatus is provided. The apparatus may be a second multi-link device, or may be a component (for example, a chip, a circuit, or a module) configured in the second multi-link device. This is not limited in this application.

The apparatus includes a transceiver unit. The transceiver unit is configured to receive a TDLS setup request frame from a first multi-link device via a first access point, where the TDLS setup request frame indicates channel information of a second TDLS direct link, the channel information includes at least one of the following: an operating class, a channel number, channel bandwidth, a channel center frequency segment 0, a channel center frequency segment 1, and a channel puncture bitmap, both a first station of the first multi-link device and a first station of the apparatus are associated with the first access point, the second TDLS direct link is a direct link between a second station of the first multi-link device and a second station of the apparatus, and the second station of the first multi-link device and the second station of the apparatus are associated with different access points or are not associated with any access point. The transceiver unit is further configured to send a TDLS setup response frame to the first multi-link device via the first access point, where the TDLS setup response frame responds to the TDLS setup request frame.

Optionally, the TDLS setup response frame includes channel information of the second TDLS direct link, and the channel information of the second TDLS direct link in the TDLS setup request frame is the same as or different from the channel information of the second TDLS direct link in the TDLS setup response frame.

In other words, the TDLS setup request frame and the TDLS setup response frame are used to negotiate the channel information of the second TDLS direct link.

With reference to the tenth aspect, in some implementations of the tenth aspect, the TDLS setup request frame is further used to request to set up a first TDLS direct link and the second TDLS direct link, and the first TDLS direct link is a direct link between the first station of the first multi-link device and the first station of the apparatus.

According to an eleventh aspect, a communication apparatus is provided. The apparatus may be a first multi-link device, or may be a component (for example, a chip, a circuit, or a module) configured in the first multi-link device. This is not limited in this application.

The apparatus includes a transceiver unit. The transceiver unit is configured to send a first frame to a second multi-link device, where the first frame is used to wake up at least one of all TDLS direct links between the apparatus and the second multi-link device. The transceiver unit is further configured to receive a third frame from the second multi-link device, where the third frame responds to the first frame.

The first frame is a TDLS peer power save management request frame or a TDLS peer traffic indication frame. The third frame is a TDLS peer power save management response frame or a TDLS peer traffic response frame.

Optionally, all the TDLS direct links include a first TDLS direct link and a second TDLS direct link. The first TDLS direct link is a direct link between a first station of the apparatus and a first station of the second multi-link device, and the second TDLS direct link is a direct link between a second station of the apparatus and a second station of the second multi-link device.

Optionally, both the first station of the apparatus and the first station of the second multi-link device are associated with a first access point, and the second station of the apparatus and the second station of the second multi-link device are associated with different access points or are not associated with any access point.

With reference to the eleventh aspect, in some implementations of the eleventh aspect, the first frame is used to wake up all the TDLS direct links between the apparatus and the second multi-link device.

Optionally, the first frame includes link identifier information corresponding to a link referenced by a TSF, and the TSF is used to determine first awake windows of all links.

With reference to the eleventh aspect, in some implementations of the eleventh aspect, the first frame is used to wake up at least one link between the apparatus and the second multi-link device.

In a manner, the first frame includes a link identifier of the at least one woken-up link.

Optionally, the first frame includes a link identifier corresponding to a link referenced by a TSF, and the TSF is used to determine a first awake window of at least one link.

In another manner, the first frame indicates that a first access category AC has buffered data, and there is a mapping relationship between the first access category and the at least one link.

For example, that there is the mapping relationship between the first access category and the at least one link includes: The first access category is mapped to a traffic identifier TID, and the at least one link is mapped to traffic of the TID.

In still another manner, the first frame is used to wake up a fourth TDLS direct link, and the fourth TDLS direct link is one of all the TDLS direct links.

In other words, the first frame is used to wake up a TDLS direct link.

Optionally, in this manner, the transceiver unit is further configured to send a second frame to the second multi-link device during an awake window of the fourth TDLS direct link, where the second frame is used to wake up at least one link other than the fourth TDLS direct link in all the TDLS direct links.

For example, the link referenced by the TSF is the fourth TDLS direct link, and the TSF is used to determine a first awake window of the fourth TDLS direct link.

According to a twelfth aspect, a communication apparatus is provided. The apparatus may be a second multi-link device, or may be a component (for example, a chip, a circuit, or a module) configured in the second multi-link device. This is not limited in this application.

The apparatus includes a transceiver unit. The transceiver unit is configured to receive a first frame from a first multi-link device, where the first frame is used to wake up at least one of all TDLS direct links between the first multi-link device and the apparatus. The transceiver unit is further configured to send a third frame to the first multi-link device, where the third frame responds to the first frame.

The first frame is a TDLS peer power save management request frame or a TDLS peer traffic indication frame. The third frame is a TDLS peer power save management response frame or a TDLS peer traffic response frame.

Optionally, all the TDLS direct links include a first TDLS direct link and a second TDLS direct link. The first TDLS direct link is a direct link between a first station of the first multi-link device and a first station of the apparatus, and the second TDLS direct link is a direct link between a second station of the first multi-link device and a second station of the apparatus.

Optionally, both the first station of the first multi-link device and the first station of the apparatus are associated with a first access point, and the second station of the first multi-link device and the second station of the apparatus are associated with different access points or are not associated with any access point.

With reference to the twelfth aspect, in some implementations of the twelfth aspect, the first frame is used to wake up all the TDLS direct links between the first multi-link device and the apparatus.

Optionally, the first frame includes link identifier information corresponding to a link referenced by a TSF, and the TSF is used to determine first awake windows of all links.

With reference to the twelfth aspect, in some implementations of the twelfth aspect, the first frame is used to wake up at least one link between the first multi-link device and the apparatus.

In a manner, the first frame further includes a link identifier of the at least one woken-up link.

In another manner, the first frame further indicates that a first access category AC has buffered data, and there is a mapping relationship between the first access category and the at least one link. The apparatus further includes a processing unit, configured to determine the at least one link based on the first frame and the first access category.

For example, that there is the mapping relationship between the first access category and the at least one link includes: The first access category is mapped to a traffic identifier TID, and the at least one link is mapped to traffic of the TID.

In still another manner, the first frame is used to wake up a fourth TDLS direct link, and the fourth TDLS direct link is one of all the TDLS direct links.

In other words, the first frame is used to wake up a TDLS direct link.

Optionally, the transceiver unit is further configured to receive a second frame from the first multi-link device through the fourth TDLS direct link, where the second frame is used to wake up at least one link other than the fourth TDLS direct link in all the TDLS direct links.

For example, the link referenced by the TSF is the fourth TDLS direct link, and the TSF is used to determine a first awake window of the fourth TDLS direct link.

According to a thirteenth aspect, a communication apparatus is provided. The communication apparatus includes a processor, configured to invoke a computer program stored in a memory and run the computer program, and control a transceiver to receive and send a signal, so that the communication apparatus performs the method in any one of the first aspect to the sixth aspect or any possible implementation of these aspects. Optionally, the communication apparatus may further include the memory, configured to store the computer program. The communication apparatus may further include the transceiver.

According to a fourteenth aspect, a communication apparatus is provided, including a processor. The processor is configured to process data and/or information, so that the method according to any one of the first aspect to the sixth aspect or any possible implementation of these aspects is performed. Optionally, the communication apparatus may further include a communication interface. The communication interface is configured to receive data and/or information, and transmit the received data and/or information to the processor. Optionally, the communication interface is further configured to output data and/or information processed by the processor.

According to a fifteenth aspect, a chip is provided, including a processor. The processor is configured to run a program or instructions, so that the chip performs the method according to any one of the first aspect to the sixth aspect or the possible implementations of these aspects. Optionally, the chip may further include a memory, and the memory is configured to store the program or the instructions. Optionally, the chip may further include a transceiver.

According to a sixteenth aspect, a computer-readable storage medium is provided. The computer-readable storage medium stores computer instructions, and the computer instructions are used to implement the method in any one of the first aspect to the sixth aspect or any possible implementation of these aspects.

According to a seventeenth aspect, a computer program product is provided. The computer program product includes computer program code, and the computer program code is used to implement the method according to any one of the first aspect to the sixth aspect or any possible implementation of any one of these aspects.

According to an eighteenth aspect, a wireless communication system is provided, including the foregoing first multi-link device and second multi-link device.

### BRIEF DESCRIPTION OF DRAWINGS

FIG. 1 is a diagram of an application scenario according to this application;
FIG. 2 is a diagram of a structure of an AP MLD according to an embodiment of this application;
FIG. 3 shows a communication connection between a non-AP MLD and an AP MLD;
FIG. 4 shows a frame structure of a link identifier element;
FIG. 5 shows a frame structure of a wakeup schedule element;
FIG. 6 shows a format of a QoS capability element;
FIG. 7 shows a format of a PTI control element and a format of a TPU buffer status element;
FIG. 8 is a schematic flowchart of a communication method 200 according to an embodiment of this application;
FIG. 9 shows a frame structure of a TDLS multi-link element;
FIG. 10 is a diagram of a frame structure of an MLO link information subelement;
FIG. 11 is a schematic flowchart of a communication method 300 according to an embodiment of this application;
FIG. 12 shows an example of an application scenario applicable to this application;
FIG. 13 is a diagram of a communication apparatus according to an embodiment of this application;
FIG. 14 is a diagram of another structure of a communication apparatus according to an embodiment of this application; and
FIG. 15 is a diagram of still another structure of a communication apparatus according to an embodiment of this application.

### DESCRIPTION OF EMBODIMENTS

The following describes technical solutions of this application with reference to accompanying drawings.

The technical solutions provided in embodiments of this application are applicable to a wireless local area network (wireless local area network, WLAN) scenario. For example, IEEE 802.11-related standards such as the 802.11a/b/g standard, the 802.11n standard, the 802.11ac standard, the 802.11ax standard, a next-generation Wi-Fi protocol of IEEE 802.11ax like 802.11be, Wi-Fi 7, extremely high throughput (extremely high throughput, EHT), 802.11ad, 802.11ay, or 802.11bf, are supported. For another example, a next generation protocol of 802.11be or Wi-Fi 8, is supported. The technical solutions provided in embodiments of this application may be applied to an ultra-wideband (ultra-wideband, UWB)-based wireless personal area network system, for example, the 802.15 series standards, or may be applied to a sensing (sensing) system, for example, the 802.11bf series standards. The 802.11n standard is referred to as high throughput (high throughput, HT), the 802.11ac standard is referred to as very high throughput (very high throughput, VHT), the 802.11ax standard is referred to as high efficient (high efficient, HE), and the 802.11be standard is referred to as extremely high throughput (extremely high throughput, EHT).

Although embodiments of this application are mainly described by using an example in which a WLAN network is deployed, especially a network to which the IEEE 802.11 system standards are applied, a person skilled in the art easily understands that various aspects in embodiments of this application may be extended to other networks that use various standards or protocols, for example, a high performance radio local area network (high performance radio local area network, HIPERLAN), a wireless wide area network (wireless wide area network, WWAN), a wireless personal area network (wireless personal area network, WPAN), or other networks that are known or developed in the future. Therefore, regardless of a used coverage area and a used wireless access protocol, the various aspects provided in embodiments of this application are applicable to any suitable wireless network.

The technical solutions in embodiments of this application may be further applied to various communication systems, for example, a WLAN communication system, a wireless fidelity (wireless fidelity, Wi-Fi) system, a long term evolution (long term evolution, LTE) system, an LTE frequency division duplex (frequency division duplex, FDD) system, LTE time division duplex (time division duplex, TDD), a universal mobile telecommunication system (universal mobile telecommunication system, UMTS), a worldwide interoperability for microwave access (worldwide interoperability for microwave access, WiMAX) communication system, a fifth generation (5th generation, 5G) system or new radio (new radio, NR), a future sixth generation (6th generation, 6G) system, an internet of things (internet of things, IoT) network, or a vehicle-to-everything (vehicle to x, V2X).

The communication systems applicable to this application are merely examples for description, and the communication systems applicable to this application are not limited thereto. This is described herein once for all, and details are not described below again.

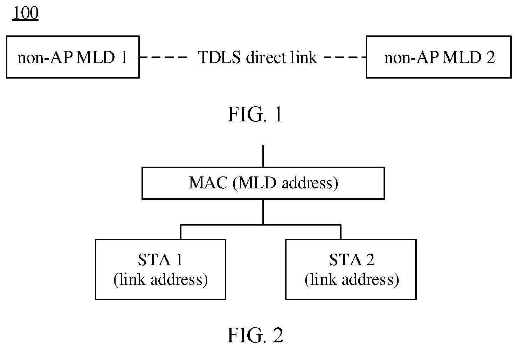

FIG. 1 is a diagram of an application scenario 100 applicable to this application. As shown in FIG. 1, the solution in this embodiment of this application may be applied to communication between non-access point multi-link devices (non-access point multi-link devices, non-AP MLDs), for example, a non-AP MLD 1 and a non-AP MLD 2 in FIG. 1. The non-AP MLD 1 and the non-AP MLD 2 may set up one or more tunneled direct link setup (tunneled direct link setup, TDLS) direct links, two ends of at least one of TDLS direct links to be set up between the non-AP MLD 1 and the non-AP MLD 2 are associated with a same access point (access point, AP), in other words, belong to a same basic service set (basic service set, BSS).

To better understand embodiments of this application, related concepts in this application are first described.

### 1. Multi-link device (multi-link device, MLD)

The multi-link device means that the device has a plurality of radio frequency modules that separately operate on different frequency bands or channels. For example, a frequency band on which the multi-link device operates may include but is not limited to all or a part of sub (sub) 1 GHz, 2.4 GHz, 5 GHz, 6 GHz, and a high frequency 60 GHz. When a spacing between channels on which two radio frequency modules operate in one device is large enough, the two radio frequency modules may operate independently without interference to each other. Because operating frequency bands of links are different, the multi-link device may also be referred to as a multi-band device (multi-band device). The multi-link device supports parallel transmission on a plurality of links, and therefore has higher transmission efficiency and higher throughput.

The multi-link device includes one or more affiliated stations (affiliated stations). The affiliated station is a logical station. The affiliated station may be understood as a virtual unit or the foregoing radio frequency module. Each affiliated station may operate on one link. The affiliated station (station, STA) may be an access point (access point, AP) station, or may be a non-access point station (non-access point station, non-AP STA), which are respectively referred to as an AP station and a non-AP station for short. For ease of description, in this application, a multi-link device whose affiliated station is an AP may be referred to as a multi-link AP or an AP multi-link device (AP MLD), and a multi-link device whose affiliated station is a non-AP STA may be referred to as a multi-link non-AP STA, a non-AP multi-link device (non-AP MLD), or a STA MLD. The AP may also be referred to as a service access point (service access point, SAP), and the non-AP station may be referred to as a station or a STA for short.

For an MLD, each link has an affiliated station MAC address (affiliated STA MAC address). The affiliated station MAC address may also be referred to as a link address (link address). In addition, each MLD has an MLD address, that is, an MLD MAC address, as shown in FIG. 2.

The non-AP MLD in this embodiment of this application is user equipment (user equipment, UE) that is allowed to communicate with the AP or the AP MLD. For example, the non-AP MLD may be user equipment that can be connected to the Internet, for example, a tablet computer, a notebook computer, an ultra-mobile personal computer (ultra-mobile personal computer, UMPC), a handheld computer, a netbook, a personal digital assistant (personal digital assistant, PDA), or a mobile phone, an Internet of Things node in the Internet of Things, a vehiclemounted communication apparatus in vehicle-to-everything, or the like. The non-AP MLD may alternatively be a chip or a processing system in the foregoing user equipment.

The AP MLD in this embodiment of this application may be a terminal or a network device that provides a service for the non-AP MLD. For example, the AP MLD may be a communication entity like a communication server, a router, a switch, or a bridge, or the AP MLD may include various forms of macro base stations, micro base stations, relay stations, and the like. Certainly, the AP MLD may alternatively be a chip or a processing system in the foregoing various forms of devices. In this way, the method and functions in embodiments of this application are implemented.

Specific forms of the non-AP MLD and the AP MLD are not specifically limited in this embodiment of this application, and the foregoing is merely an example for description.

The multi-link device may implement wireless communication in compliance with 802.11 series protocols, for example, in compliance with the 802.11be protocol. The 802.11 protocol may be a protocol that supports 802.11be or is compatible with 802.11be. The multi-link device may implement communication with another device. The another device may be a multi-link device, or may not be a multi-link device. For example, the another device is a legacy (legacy) AP or a non-AP STA.

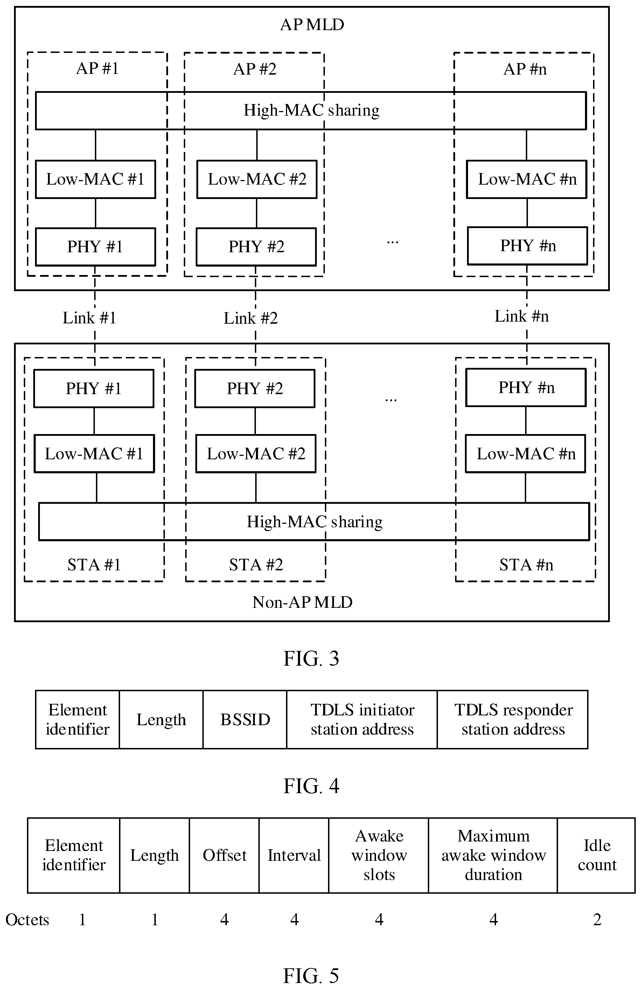

FIG. 3 shows a communication connection between a non-AP MLD and an AP MLD.

As shown in FIG. 3, the AP MLD may include physical layer (physical layer, PHY) processing circuits (for example, a PHY #1, a PHY #2, and a PHY #n shown in FIG. 3) and a media access control (media access control, MAC) layer processing circuit. The physical layer processing circuit may be configured to process a physical layer signal, and the MAC layer processing circuit may be configured to process a MAC layer signal. Further, a MAC layer may be further divided into one high-MAC (high-MAC) layer (for example, a high-MAC layer shown in FIG. 3) and a plurality of low-MAC (low-MAC) layers (for example, a low-MAC #1 layer, a low-MAC #2 layer, and a low-MAC #n layer shown in FIG. 3). The high-MAC layer is separately connected to the plurality of low-MAC layers. That is, the high-MAC layer is shared by a plurality of links. The high-MAC layer mainly completes allocation, encryption, decryption, and the like of a sequence number (sequence number, SN) and a packet number (packet number, PN) of a MAC service data unit (MAC service data unit, MSDU). Each low-MAC layer mainly completes assembly, channel access, packet sending, acknowledgment reception, and the like of a MAC protocol data unit (MAC protocol data unit, MPDU) of a respective link. In FIG. 3, in the AP MLD, the PHY #1 layer, the low-MAC #1 layer, and the high-MAC layer may be considered as an AP #1, the PHY #2 layer, the low-MAC #2 layer, and the high-MAC layer may be considered as an AP #2, ..., and the PHY #n layer, the low-MAC #n layer, and the high-MAC layer may be considered as an AP #n. In other words, it may be understood that the multi-link AP includes N AP entities. In the non-AP MLD, the situation is similar. To be specific, the high-MAC layer in the non-AP MLD is also shared by a plurality of links. The PHY #1 layer, the low-MAC #1 layer, and the high-MAC layer are considered as a STA #1, the PHY #2 layer, the low-MAC #2 layer, and the high-MAC layer are considered as a STA #2, ..., and the PHY #n layer, the low-MAC #n layer, and the high-MAC layer are considered as a STA #n. In other words, it may be understood that the non-AP MLD includes N STA entities.

As shown in FIG. 3, the PHY #1 of the AP #1 in the AP MLD is connected to the PHY #1 of the STA #1 in the non-AP MLD, and the AP #1 in the AP MLD and the STA #1 in the non-AP MLD communicate through a link (for example, a link #1 shown in FIG. 3). The PHY #2 of the AP #2 in the AP MLD is connected to the PHY #2 of the STA #2 in the non-AP MLD, and the AP #2 in the AP MLD and the STA #2 in the non-AP MLD communicate through a link (for example, a link #2 shown in FIG. 3). The PHY #n of the AP #n in the AP MLD is connected to the PHY #n of the STA #n in the non-AP MLD, and the AP #n in the AP MLD and the STA #n in the non-AP MLD communicate through a link (for example, a link #n shown in FIG. 3).

It should be noted that FIG. 3 is merely a simple diagram, and does not constitute any limitation on the protection scope of this application. For internal structures of the AP and the STA, refer to descriptions in the conventional technology, or refer to internal structures of the AP and the STA after future technology development. This is not limited in this application, and details are not described again. In addition, a quantity of STAs affiliated with the AP MLD and a quantity of STAs affiliated with the non-AP MLD may be the same or may be different. This is not limited in this application.

### 2. Basic service set (basic service set, BSS)

The BSS is used to describe a group of devices that can communicate with each other in a WLAN. The WLAN may include a plurality of BSSs. Each BSS has a unique identifier, which is referred to as a basic service set identifier (basic service set identifier, BSSID). The BSS may be understood as a management range of the AP. One BSS includes one AP and one or more non-AP STAs associated with the AP.

### 3. Tunneled direct link setup (tunneled direct link setup, TDLS)

TDLS is a device-to-device (device-to-device, D2D) communication manner. With assistance of an associated AP, two non-AP stations (non-access point station, non-AP STA) in a same BSS may set up a TDLS direct link. After the TDLS direct link is successfully set up, the two non-AP STAs can directly send data to each other without using the AP. In this way, a transmission rate can be increased, and a communication delay can be reduced.

TDLS-related operations include the following.
(1) TDLS discovery (discovery): TDLS discovery is completed by exchanging a TDLS discovery request frame (TDLS discovery request frame) and a TDLS discovery response frame (TDLS discovery response frame) between a TDLS initiator (initiator) and a TDLS responder (responder).
(2) TDLS setup (setup): TDLS setup is completed by exchanging a TDLS setup request frame (TDLS setup request frame), a TDLS setup response frame (TDLS setup response frame), and a TDLS setup confirm frame (TDLS setup confirm frame) between a TDLS initiator and a TDLS responder, and the TDLS initiator and the TDLS responder may complete derivation of a TDLS peer key (TDLS peer key, TPK) through interaction of the three frames.
(3) TDLS teardown (teardown): TDLS teardown is completed by exchanging a TDLS teardown frame (TDLS teardown frame) between a TDLS initiator and a TDLS responder.
(4) TDLS power save (power save): TDLS power save is mainly completed by exchanging a TDLS peer power save management request frame (TDLS peer power save management request frame), a TDLS peer power save management response frame (TDLS peer power save management response frame), a TDLS peer traffic indication frame (TDLS peer traffic indication frame), and a TDLS peer traffic response frame (TDLS peer traffic response frame) between a TDLS initiator and a TDLS responder.
(5) TDLS channel switch (channel switch): TDLS channel switch is completed by exchanging a TDLS channel switch request frame (TDLS channel switch request frame) and a TDLS channel switch response frame (TDLS channel switch response frame) between a TDLS initiator and a TDLS responder.

For an interaction manner and a type of each of the foregoing frames, refer to Table 1. The interaction manner includes two manners: Via AP and Direct. Via AP indicates that the frame needs to be forwarded via the AP, and "Direct" indicates that the frame may be directly transmitted through the TDLS direct link.

**Table 1**

| Frame name | Interaction manner (Via AP or Direct) | Frame type |
|---|---|---|
| TDLS discovery request frame | Via AP | Data frame (Data frame) |
| TDLS discovery response frame | Direct | Public action frame (which belongs to a management frame) |
| TDLS setup request frame | Via AP | Data frame |
| TDLS setup response frame | Via AP | Data frame |
| TDLS setup confirm frame | Via AP | Data frame |
| TDLS teardown frame | Direct or via AP. The frame is forwarded via the AP if the direct link is not reachable. | Data frame |
| TDLS channel switch request frame | Direct | Data frame |
| TDLS channel switch response frame | Direct | Data frame |
| TDLS peer power save management request frame | Direct | Data frame |
| TDLS peer power save management response frame | Direct | Data frame |
| TDLS peer traffic indication frame | Via AP | Data frame |
| TDLS peer traffic response frame | Direct | Data frame |

In the foregoing frames, all frames except the TDLS discovery response frame are encapsulated as data frames, and may be collectively referred to as TDLS action frames. The TDLS discovery response frame is not a TDLS action frame, is a public action frame, and is directly sent in a form of a management frame.

The TDLS action frame always carries a link identifier element (link identifier element). A format of the link identifier element is shown in FIG. 4. Meanings of fields in the link identifier element are as follows:
(1) Element identifier (element ID) field: The element identifier field is used to identify the link identifier element.
(2) Length (length) length field: The length field indicates a length of the link identifier element.
(3) BSSID field: When a TDLS initiator station (TDLS initiator STA) is a legacy STA, that is, is not affiliated with a non-AP MLD, this field is set to a BSSID of a BSS in which the TDLS initiator station is located. When a TDLS initiator station is affiliated with a non-AP MLD, the field is set to a corresponding BSSID of an uplink/downlink corresponding to a TDLS direct link that the non-AP MLD wants to set up, that is, a BSSID of a BSS in which stations at two ends of the TDLS direct link are located.
(4) TDLS initiator station address (TDLS initiator STA address) field: When a TDLS initiator station is not affiliated with a non-AP MLD, this field is set to a MAC address of the TDLS initiator station. When the TDLS initiator station is affiliated with a non-AP MLD, this field is set to an MLD MAC address of the non-AP MLD.
(5) TDLS responder station address (TDLS responder STA address) field: When a TDLS responder station (TDLS responder STA) is not affiliated with a non-AP MLD, the field is set to a MAC address of the TDLS responder station. When the TDLS responder station is affiliated with a non-AP MLD, this field is set to an MLD MAC address of the non-AP MLD.

### 4. TDLS power save mechanism

Currently, there are two TDLS power save mechanisms defined in the protocol. One is a TDLS peer power save mode (TDLS peer power save mode), and negotiation is performed by using a TDLS peer power save management request frame and a TDLS peer power save management response frame. The other is a TDLS peer unscheduled automatic power-save delivery (TDLS peer unscheduled automatic power-save delivery, TDLS Peer U-APSD) mechanism, which is implemented by using a TDLS peer traffic indication frame and a TDLS peer traffic response frame. The following separately describes the two power save mechanisms. The TDLS peer U-APSD mechanism may be referred to as a TPU mechanism for short.

### (1) TDLS peer power save mode

The TDLS peer power save mode is a mechanism based on periodic wakeup scheduling. A TDLS initiator STA and a TDLS responder STA may negotiate, by using a TDLS peer power save management request frame and a TDLS peer power save management response frame, information such as a start time of a first awake window, an interval of awake windows, and duration of the awake window, so that the TDLS responder STA can wake up in each awake window.

The TDLS peer power save management request frame includes the following fields: a category (Category), a TDLS action (TDLS action), a dialog token (dialog token), a link identifier element (link identifier element), and a wakeup schedule element (wakeup schedule element). A frame format of the wakeup schedule element is shown in FIG. 5. Meanings of fields in the wakeup schedule element are as follows:
(1) Element identifier (element ID) field: The element identifier field is used to identify the wakeup schedule element.
(2) Length (length) field: The length field indicates a length of the wakeup schedule element.
(3) Offset (offset) field: The offset field indicates an offset of the start time of the first awake window relative to a TSF 0.
(4) Interval (interval) field: The interval field indicates an interval between two consecutive awake windows.
(5) Awake window slots (awake window slots) field: The awake window slots field indicates duration of the awake window, measured in backoff slots.
(6) Maximum awake window duration (maximum awake window duration) field: The maximum awake window duration field indicates maximum duration of the awake window, measured in microseconds.
(7) Idle count (idle count) field: The idle count field indicates a number of consecutive wakeup windows in which wakeup scheduling needs to be deleted when no unicast frame is received.

The TDLS peer power save management response frame includes the following fields: a category, a TDLS action, a dialog token, a status code (status code), and a link identifier element (link identifier element). The status code indicates whether the TDLS responder STA accepts a wakeup parameter in the wakeup schedule element in the TDLS peer power save management request frame. If the status code indicates rejection, the TDLS peer power save management response frame further includes the wakeup schedule element, and the wakeup schedule element is used to carry a wakeup parameter recommended or expected by the TDLS responder STA. The wakeup parameter in the TDLS peer power save management response frame may be partially the same as or completely different from the wakeup parameter in the TDLS peer power save management request frame. A format of the wakeup schedule element in the TDLS peer power save management response frame is still shown in FIG. 5.

### (2) TDLS peer U-APSD mechanism

First, during TDLS link setup, a quality of service (quality of service, QoS) capability element (QoS capability element) is carried in a TDLS setup request frame, a TDLS setup response frame, and a TDLS setup confirm frame, to implement STA identity negotiation. An identity of a STA includes a sleep STA (sleep STA), a buffer STA (buffer STA) and a sleeping buffer STA (sleeping buffer STA).

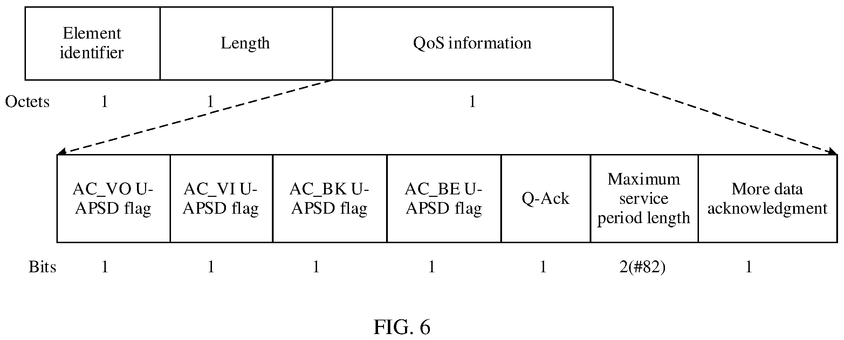

Specifically, FIG. 6 shows a format of the QoS capability element. As shown in FIG. 6, the element includes an element identifier (element ID) field, a length (length) field, and a QoS information (QoS info) field. The QoS information field includes:
(1) a U-APSD flag of a voice access category (access category_voice, AC_VO) (AC_VO U-APSD flag), indicating whether both triggering and sending are enabled for the voice access category;
(2) a U-APSD flag of a video access category (AC_VI U-APSD flag), indicating whether both triggering and sending are enabled for the video access category;
(3) a U-APSD flag of a background access category (AC_BK U-APSD flag), indicating whether both triggering and sending are enabled for the video access category;
(4) a U-APSD flag of a best-effort access category (AC_BE U-APSD flag), indicating whether both triggering and sending are enabled for the video access category;
(5) Q-Ack, indicating whether a Q-Ack mechanism is supported;
(6) a maximum service period (service period, SP) length (max SP length), indicating a maximum service period length; and
(7) more data acknowledgment (more data ack), indicating whether parsing of more data (more data) bits in an ACK frame and a block acknowledgment (block ack, BA) frame is supported.

In this mechanism, if the TDLS STA sets one or more U-APSD flag bits in the QoS Info field to 1, the STA is referred to as a sleep STA. If the TDLS STA sets all U-APSD flag bits to 0, the STA is referred to as a buffer STA. When STAs at two ends set one or more U-APSD flag bits to 1, the two STAs are both referred to as sleeping buffer STAs.

In the TDLS peer U-APSD mechanism, when a buffer STA needs to send data to a sleep STA, the buffer STA sends a TDLS peer traffic indication frame to an AP, and the AP forwards the TDLS peer traffic indication frame to the sleep STA. Both the buffer STA and the sleep STA are associated with the AP. When receiving the TDLS peer traffic indication frame, the sleep STA wakes up a direct link between the buffer STA and the sleep STA, and responds with a TDLS peer traffic response frame through the direct link to notify the buffer STA that the link has been woken up. Then, the buffer STA that receives the TDLS peer traffic response frame may send buffered data to the sleep STA. When the buffer STA sets an end of service period (end of service period, EOSP) field to 1, the sleep STA may switch back to a doze (doze) state.

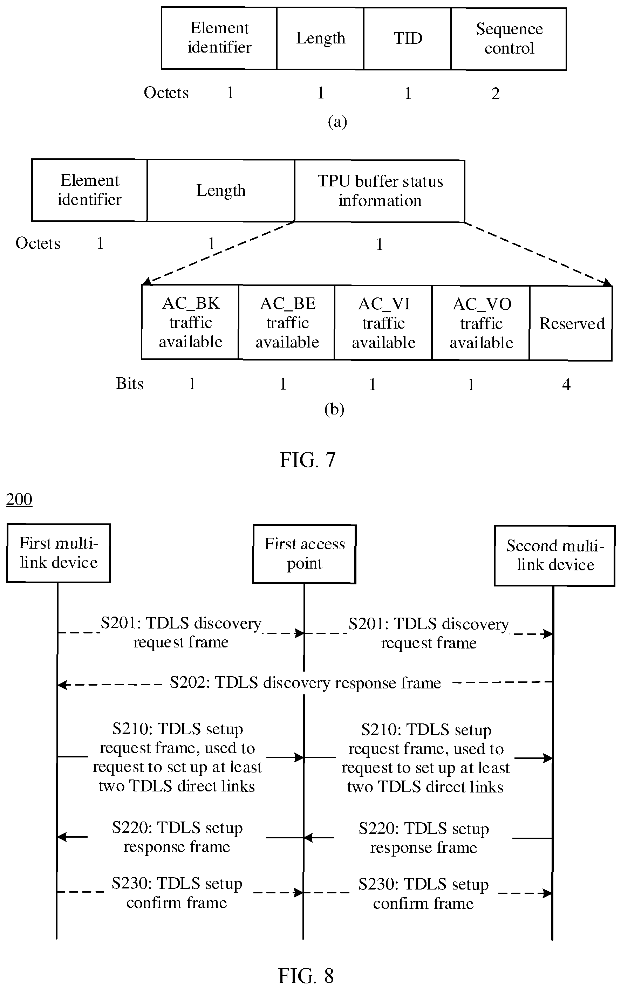

The TDLS peer traffic indication frame includes the following fields: a category, a TDLS action, a dialog token, a link identifier element, a peer traffic indication (peer traffic indication, PTI) control element (control element), and a buffer status element (TPU buffer status element). A format of the PTI control element is shown in (a) in FIG. 7, and the PTI control element includes the following fields:
(1) an element identifier (element ID) field, used to identify the PTI control element;
(2) a length (length) field, indicating a length of the PTI control element;
(3) a traffic identifier (traffic identifier, TID) field, which is set to a TID corresponding to a MAC protocol data unit (MAC protocol data unit, MPDU) that is recently sent to the sleep STA through the direct link; and
(4) a sequence control (sequence control) field, which is set to a sequence number corresponding to the MPDU that is recently sent to the sleep STA through the direct link.

A format of the TPU buffer status element is shown in (b) in FIG. 7, and the TPU buffer status element includes the following fields:
(1) an element identifier (element ID) field, used to identify the wakeup schedule element;
(2) a length (length) field, indicating a length of the wakeup schedule element; and
(3) a TPU buffer status information (TPU buffer status information) field, including an AC_BK traffic available (AC_BK traffic available) field, an AC_BE traffic available (AC_BE traffic available) field, an AC_VI traffic available (AC_VI traffic available) field, and an AC_VO traffic available (AC_VO traffic available) field, where the fields separately indicate whether there is buffered data of a corresponding AC.

The TDLS peer traffic response frame includes the following fields: a category, a TDLS action, a dialog token, and a link identifier element.

TDLS is applied to a multi-link device (multi-link device, MLD), and a TDLS direct link may also be set up between two non-AP MLDs that belong to a same BSS. However, currently, the TDLS direct link is allowed to be set up only when both ends of the direct link belong to members of a same BSS. This limits a quantity of TDLS direct links that can be set up between two non-AP multi-link devices, and is not conducive to efficiency of transmission between the non-AP multi-link devices.

In view of this, this application provides a communication method and a communication apparatus, to set up at least two TDLS direct links between the non-AP MLDs, so that transmission efficiency can be improved.

FIG. 8 is a schematic flowchart of a communication method 200 according to an embodiment of this application. As shown in FIG. 8, the method includes the following steps. The method is applicable to a TDLS direct link setup process.

S210: A first multi-link device sends a TDLS setup request frame to a second multi-link device via a first access point, and correspondingly, the second multi-link device receives the TDLS setup request frame.

The TDLS setup request frame is used to request to set up a first TDLS direct link and a second TDLS direct link. In other words, the TDLS setup request frame is used to request to set up at least two TDLS direct links.

For example, that the first multi-link device sends the TDLS setup request frame to the second multi-link device via the first access point may mean that a station (for example, referred to as a first station of the first multi-link device, STA 1 for short) affiliated with the first multi-link device sends the TDLS setup request frame to the first access point, and the first access point forwards the TDLS setup request frame to a station (for example, referred to as a first station of the second multi-link device, STA 2 for short) affiliated with the second multi-link device. Both the STA 1 and the STA 2 are associated with the first access point.

In this application, the first multi-link device may be referred to as a TDLS initiator (TDLS Initiator), the STA 1 may be referred to as a TDLS initiator station (TDLS Initiator STA), the second multi-link device may be referred to as a TDLS responder (responder), and the STA 2 may be referred to as a TDLS responder station (responder STA).

Optionally, both the first multi-link device and the second multi-link device are non-AP MLDs.

Both the first TDLS direct link and the second TDLS direct link are links between the first multi-link device and the second multi-link device. For example, the first TDLS direct link is a direct link between the STA 1 and the STA 2, and the second TDLS direct link is a direct link between another station (for example, referred to as a second station of the first multi-link device, STA 3 for short) affiliated with the first multi-link device and another station (for example, referred to as a second station of the second multi-link device, STA 4 for short) affiliated with the second multi-link device.

S220: The second multi-link device sends a TDLS setup response frame to the first multi-link device via the first access point, and correspondingly, the first multi-link device receives the TDLS setup response frame.

The TDLS setup response frame responds to the TDLS setup request frame.

Optionally, the TDLS setup response frame indicates whether the first TDLS direct link and the second TDLS direct link are successfully set up.

For example, the TDLS setup response frame may include a plurality of status code (status code) fields, each status code field corresponds to one link, and each status code field indicates whether a corresponding link is successfully set up.

Based on the foregoing solution, a plurality of TDLS direct links may be set up, and all the plurality of TDLS direct links may be used to transmit information between the multi-link devices, to improve communication efficiency.

Optionally, the method 200 further includes: S230: The first multi-link device sends a TDLS setup confirm frame to the second multi-link device via the first access point, and correspondingly, the second multi-link device receives the TDLS setup confirm frame.

The TDLS setup confirm frame may also indicate whether the first TDLS direct link and the second TDLS direct link are successfully set up.

Optionally, for the STA 3 and the STA 4 at two ends of the second TDLS direct link, there are the following two cases:
Case 1: The STA 3 and the STA 4 are associated with different access points, or at least one of the STA 3 and the STA 4 is not associated with any access point.

In this application, a link in which STAs at two ends of the link are associated with a same access point may be referred to as a basic TDLS direct link (basic TDLS direct link), and a link in which STAs at two ends of the link are associated with different access points may be referred to as an extra TDLS direct link (extra TDLS direct link). The basic TDLS direct link and the extra TDLS direct link are two types of links. In other words, STAs at two ends of the basic TDLS direct link belong to a same BSS, and STAs at two ends of the extra TDLS direct link do not belong to a same BSS. Therefore, in Case 1, the first TDLS direct link is a basic TDLS direct link, and the second TDLS direct link is an extra TDLS direct link.

The first multi-link device may indicate link types of the first TDLS direct link and the second TDLS direct link to the second multi-link device by using a newly added field in a TDLS multi-link element (TDLS multi-link element). The TDLS multi-link element may be carried in a TDLS discovery request frame and a TDLS discovery response frame, or may be carried in the TDLS setup request frame, the TDLS setup response frame, and the TDLS setup confirm frame.

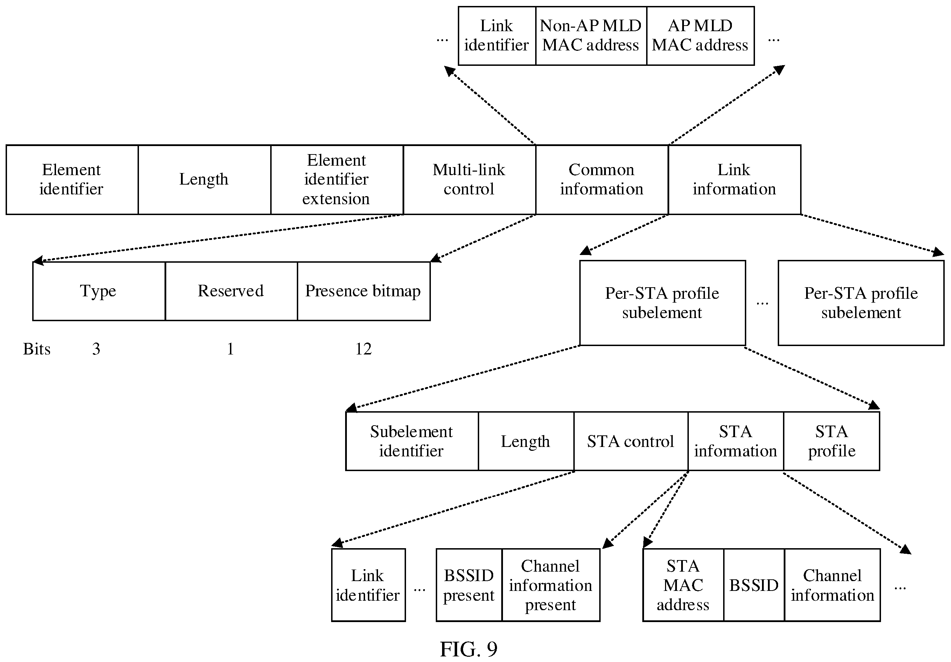

FIG. 9 shows a frame structure of a TDLS multi-link element. As shown in FIG. 9, the TDLS multi-link element includes the following fields:
(1) Element identifier (element ID) field and element identifier extension (element ID extension) field: The element identifier field and the element identifier extension field are used to identify the TDLS multi-link element.
(2) Length (length) field: The length field indicates a length of the TDLS multi-link element.
(3) Multi-link control (multi-link control) field: The multi-link control field includes a type (type) field, a reserved (reserved) field, and a presence bitmap (presence bitmap) field. The type field occupies 3 bits, and different values of the type field correspond to different multi-link element variants. When a value is 3, the type field corresponds to a TDLS multi-link element. For details, refer to Table 2.

**Table 2**

| Type field value (type subfield value) | Multi-link element variant (Multi-link element variant) |
|---|---|
| 0 | Basic multi-link element (basic multi-link element) |
| 1 | Probe request multi-link element (probe request multi-link element) |
| 2 | Reconfiguration multi-link element (reconfiguration multi-link element) |
| 3 | TDLS multi-link element (TDLS multi-link element) |
| 4 | Priority multi-link element (priority access multi-link element) |
| 5 to 7 | Reserved (reserved) |

(4) Common information (Common Info) field: The common information field indicates common information of all links. For example, the common information field may carry a link identifier field, a non-AP MLD MAC address field, and an AP MLD address field.
(5) Link information (Link Info) field: The link information field indicates configuration information of each link. The link information field includes one or more per-STA profile subelements (per-STA profile subelements). Each per-STA profile subelement may include a subelement identifier (subelement ID) field, a length (length) field, a STA control (STA control) field, a STA information (STA info) field, and a STA profile (STA profile) field. The STA control field includes a link identifier field, a BSSID present field, and a channel information present field. To be specific, information carried in each per-STA profile subelement starts with a link identifier (link ID). STA information includes a STA MAC address of an affiliated STA corresponding to the per-STA profile subelement. If a BSSID present field and a channel information present field in STA control are set to 1, the STA information may further include the BSSID and the channel information.

For example, a TDLS multi-link element in the TDLS setup request frame may include an address of the AP associated with the STA 1 and an address of the AP associated with the STA 3. A TDLS multi-link element in the TDLS setup response frame may include an address of the AP associated with the STA 2 and an address of the AP associated with the STA 4. The address of the AP may be used to determine the link types of the first TDLS direct link and the second TDLS direct link.

Specifically, the first multi-link device and the second multi-link device may add an AP MAC address present (AP MAC address present) field and an AP MAC address (AP MAC address) field to the per-STA profile subelement, and the two fields may indicate whether an affiliated station (affiliated STA) corresponding to the per-STA profile subelement is associated with an AP and indicate an associated AP MAC address. The AP MAC address may also be understood as an indication BSSID. When the AP MAC address present field is set to 1, it indicates that the affiliated STA corresponding to the per-STA profile subelement sets up a link with an AP, and the AP MAC address field indicates a corresponding AP MAC address, that is, a corresponding BSSID. When the AP MAC address present field is set to 0, it indicates that the affiliated STA corresponding to the per-STA profile subelement does not set up a link with an AP. When a per-STA profile subelement in the TDLS setup request frame and a per-STA profile subelement in the TDLS setup response frame have a same link ID, and AP MAC addresses corresponding to affiliated STAs are also the same, a TDLS direct link identified by the link ID is a basic TDLS direct link. If a per-STA profile subelement in the TDLS setup request frame and a per-STA profile subelement in the TDLS setup response frame have a same link ID, but AP MAC addresses corresponding to affiliated STAs do not exist or are different, a TDLS direct link indicated by the link ID is an extra TDLS direct link.

For another example, the first multi-link device may add 1 bit to the per-STA profile subelement, to indicate a TDLS direct link type. For example, if the 1 bit is set to 1, it indicates that a link indicated by the link ID of the per-STA profile subelement is a basic TDLS direct link; or if the 1 bit is set to 0, it indicates that a link indicated by the link ID of the per-STA profile subelement is an extra TDLS direct link.

In an implementation, that the TDLS setup request frame is used to request to set up the first TDLS direct link and the second TDLS direct link may mean that the TDLS setup request frame includes the TDLS multi-link element, and the TDLS multi-link element includes at least two per-STA profile subelements, respectively corresponding to the first TDLS direct link and the second TDLS direct link. That the TDLS setup response frame indicates whether the first TDLS direct link and the second TDLS direct link are successfully set up may mean that the TDLS setup response frame indicates that the first TDLS direct link is successfully set up (which may also be referred to as being accepted), and the second TDLS direct link may be successfully set up, or may fail to be set up (which may also be referred to as being rejected). In other words, setup of a plurality of TDLS direct links is considered successful only when at least one basic TDLS direct link in the plurality of TDLS direct links is accepted.

Because some frames in a TDLS-related operation and procedure need to be forwarded by the AP, ensuring that the at least one basic TDLS direct link in the plurality of TDLS direct links is accepted can ensure that at least one AP (that is, an AP associated with STAs at two ends of the basic TDLS direct link) is configured to forward information between the first multi-link device and the second multi-link device. In this way, communication between multi-link devices can be ensured.

Optionally, when the first access point is affiliated with an AP MLD, a link identifier of any basic TDLS direct link may be allocated by the AP MLD. For example, in Case 1, the STA 1 may also receive information from the first access point, where the information includes a link identifier of the first TDLS direct link and a link identifier of the second TDLS direct link. Optionally, when the first access point is not affiliated with an AP MLD, a link identifier of the link may be allocated by a TDLS initiator station. For example, in Case 1, the STA 1 may indicate a link identifier of the first TDLS direct link and a link identifier of the second TDLS direct link to the STA 2. For example, a link identifier (link ID) field may be carried in the TDLS multi-link element (TDLS multi-link element), as shown in FIG. 9. The first TDLS direct link and the second TDLS direct link have different link identifiers.

Based on the foregoing solution, in this application, link identifiers may be set for a plurality of set up links, to help distinguish between different links and ensure communication performance.

Optionally, when there is one basic TDLS direct link and at least one extra TDLS direct link, a timing synchronization function (timing synchronization function, TSF) of the extra TDLS direct link is the same as a TSF of the basic TDLS direct link by default, and a target beacon transmission time (target beacon transmission time, TBTT) of the extra TDLS direct link is the same as a TBTT of the basic TDLS direct link by default. For example, in Case 1, there is one basic TDLS direct link and one extra TDLS direct link, and a TSF of the extra TDLS direct link may be the same as a TSF of the basic TDLS direct link by default.

Because stations at two ends of the extra TDLS direct link do not belong to a same BSS, a unified TSF and a unified TBTT cannot be determined. In this application, a reference link for the TSF and the TBTT may be set for the extra TDLS direct link, to implement the timing synchronization function of the extra TDLS direct link.

Optionally, in this case, the TDLS setup request frame may be further used to request to set up a third TDLS direct link.

The third TDLS direct link is a direct link between another station (denoted as a third station of the first multi-link device, STA 5 for short) affiliated with the first multi-link device and another station (denoted as a third station of the second multi-link device, STA 6 for short) affiliated with the second multi-link device. Both the STA 5 and the STA 6 are associated with a second access point. In other words, the third TDLS direct link is a basic TDLS direct link.

In an implementation, the first access point is different from the second access point.

In an example of this implementation, both the first access point and the second access point are affiliated with multi-link devices, and the multi-link devices with which the first access point and the second access point are affiliated may be the same or may be different. This is not limited. For example, both the first access point and the second access point are affiliated with an AP MLD 1 (an example of a third multi-link device). For another example, the first access point and the second access point are respectively affiliated with an AP MLD 1 and an AP MLD 2.

In still another example of this implementation, at least one of the first access point and the second access point may be a legacy AP that is not affiliated with any multi-link device. For example, one of the first access point and a third access point is affiliated with the AP MLD, and the other is a legacy AP. For another example, both the first access point and the third access point are legacy APs.

In still another implementation, the first access point is the same as the second access point. In other words, the STA 1, the STA 2, the STA 5, and the STA 6 are all associated with a same access point.

In this implementation, the access point associated with the STA 1, the STA 2, the STA 5, and the STA 6 may be affiliated with the AP MLD, or may be a legacy AP.

Based on the foregoing solution, a plurality of links can be set up in this application, so that more scenarios can be used, and flexibility is high.

Optionally, when a plurality of basic TDLS direct links and at least one extra TDLS direct link are set up between the first multi-link device and the second multi-link device, if an AP associated with STAs at two ends of any basic TDLS direct link is affiliated with the AP MLD, link identifiers of the plurality of basic TDLS direct links may be allocated by the AP MLD, and a link identifier of the extra TDLS direct link may be allocated by the TDLS initiator STA. For example, in the method 200, if both the first access point and the second access point are affiliated with the AP MLD 1, an identifier of a link between the STA 1 and the STA 2 and an identifier of a link between the STA 5 and the STA 6 may be allocated by the AP MLD 1, and an identifier of a link between the STA 3 and the STA 4 may be allocated by the STA 1. In other words, the AP MLD 1 may indicate the link identifier of the first TDLS direct link and a link identifier of the third TDLS direct link to the first multi-link device and the second multi-link device, and the STA 1 may indicate the link identifier of the second TDLS direct link to the STA 2. When a plurality of basic TDLS direct links and at least one extra TDLS direct link are set up between the first multi-link device and the second multi-link device, all link identifiers may also be allocated by the TDLS initiator STA. For example, in the method 200, regardless of which example the first access point and the second access point belong to, the identifier of the link between the STA 1 and the STA 2, the identifier of the link between the STA 3 and the STA 4, and the identifier of the link between the STA 5 and the STA 6 may be allocated by the STA 1. The STA 1 may indicate the link identifier of the first TDLS direct link, the link identifier of the second TDLS direct link, and the link identifier of the third TDLS direct link to the STA2. For example, the link identifier (link ID) field may be carried in the TDLS multi-link element (TDLS multi-link element), as shown in FIG. 9. The first TDLS direct link, the second TDLS direct link, and the third TDLS direct link have different link identifiers.

Optionally, when a plurality of basic TDLS direct links and at least one extra TDLS direct link are set up between the first multi-link device and the second multi-link device, a TSF and a TBTT of the extra TDLS direct link may be indicated in the following manner.

Specifically, the TSF of the extra TDLS direct link is the same as a TSF of one of the basic TDLS direct links, and the TBTT of the extra TDLS direct link is the same as a TBTT of one of the basic TDLS direct links. For example, in the method 200, the first multi-link device may indicate, to the second multi-link device, that a TSF of the second TDLS direct link is the same as a TSF of the first TDLS direct link or a TSF of the third TDLS direct link, and that a TBTT of the second TDLS direct link is the same as a TBTT of the first TDLS direct link or a TBTT of the third TDLS direct link. For example, the indication may be indicated by adding a TSF offset field. The field indicates an offset of the link relative to a TSF of a link corresponding to a link ID field in Common Info. When the TSF offset is 0, it indicates that a TSF of the link is the same as a TSF of a link corresponding to the link ID field in Common Info in the TDLS multi-link element.

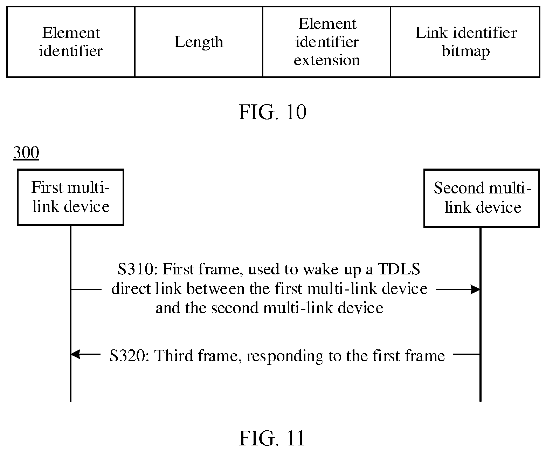

FIG. 10 is a diagram of a frame structure of an MLO link information subelement. As shown in FIG. 10, the MLO link information subelement includes the following fields:
(1) an element identifier (element ID) field and an element identifier extension (element ID extension) field, used to identify the MLO link information subelement;
(2) a length (length) field, indicating a length of the MLO link information subelement; and
(3) a link identifier bitmap (link ID bitmap) field, where each bit in this field corresponds to one link, and if a bit is set to 1, it indicates that a TSF and a TBTT of a second TDLS direct link are correspondingly the same as a TSF and a TBTT of a link corresponding to the bit that is set to 1. Optionally, the link identifier bitmap (link ID bitmap) field may be 16 bits.

Optionally, a TDLS setup response frame may further indicate whether a third TDLS direct link is successfully set up. For example, the TDLS setup response frame includes a status code corresponding to the third TDLS direct link.

Optionally, in Case 1, the first multi-link device and the second multi-link device may further negotiate a communication channel of the second TDLS direct link.

Specifically, the following manner may be used:
Manner 1: Negotiation is performed in a TDLS direct link setup process. For example, negotiation is performed by using a TDLS setup request frame, the TDLS setup response frame, and a TDLS setup confirm frame.

Specifically, the TDLS setup request frame may further indicate the channel information (the channel information present field and the channel information field shown in FIG. 9) of the second TDLS direct link. If the second multi-link device accepts the channel information of the second TDLS direct link in the TDLS setup request frame, the second multi-link device may carry the same channel information to the TDLS setup response frame, that is, repeat (repeat). If the second multi-link device rejects the channel information of the second TDLS direct link in the TDLS setup request frame, the second multi-link device may carry channel information recommended by the second multi-link device to the TDLS setup response frame. Optionally, if the first multi-link device accepts the recommended channel information, the first multi-link device may carry the recommended channel information to the TDLS setup confirm frame, to indicate that the first multi-link device accepts the recommended channel information. If the first multi-link device does not accept the recommended channel information, the first multi-link device may carry new channel information to the TDLS setup confirm frame, to indicate that the first multi-link device accepts the recommended channel information, and indicate that channel information in the TDLS setup confirm frame is used as the communication channel of the second TDLS direct link.

The channel information may include at least one of the following: an operating class (operating class), a channel number (channel number), channel bandwidth (channel bandwidth), a channel center frequency segment (channel center frequency segment, CCFS) 0, a CCFS 1, and a channel puncture bitmap (channel puncture bitmap). Optionally, the channel information may be carried in a per-STA profile subelement in a TDLS multi-link element, for example, indicated by a newly added field.

Manner 2: Negotiation is performed after the TDLS direct link is set up. For example, negotiation is performed by using a TDLS channel switch request frame and a TDLS channel switch response frame.

Specifically, after the TDLS direct link is set up, the first multi-link device may send the TDLS channel switch request frame to the second multi-link device through a first TDLS direct link. The channel switch request frame includes the channel information of the second TDLS direct link, and further includes a link identifier of the second TDLS direct link, to indicate a link corresponding to negotiated channel information. If the second multi-link device accepts the channel information of the second TDLS direct link in the TDLS channel switch request frame, the second multi-link device may set Status Code to SUCCESS in the TDLS channel switch response frame.

The channel information includes at least one of the following: an operating class, a channel number, channel bandwidth, a channel center frequency segment 0, a channel center frequency segment 1, and a channel puncture bitmap.

That the channel switch request frame includes the link identifier of the second TDLS direct link may be implemented in the following manner: For example, the MLO link information subelement (as shown in FIG. 10) is carried in the channel switch request frame, and a link corresponding to a bit set to 1 in the link identifier bitmap (link ID bitmap) field in the MLO link information subelement is the link identifier of the second TDLS direct link.

It should be understood that, for any basic TDLS direct link, a base channel (base channel) of the basic TDLS direct link is the same as a primary channel (primary channel) on which an associated AP is located. Therefore, no additional channel negotiation is required.

Based on the foregoing solution, in this application, channel information may be further negotiated for an extra TDLS direct link, so that the extra TDLS direct link and the basic TDLS direct link can operate on different communication channels, to ensure multi-link communication performance.

Case 2: A STA 3 and a STA 4 are associated with a same access point. For example, the STA 3 and the STA 4 are associated with a third access point.

Optionally, both a first access point and the third access point are affiliated with multi-link devices, and the multi-link devices with which the first access point and the third access point are affiliated may be the same or may be different. This is not limited. For example, both the first access point and the third access point are affiliated with an AP MLD 1. For another example, the first access point and the third access point are respectively affiliated with the AP MLD 1 and an AP MLD 2.

Optionally, at least one of the first access point and the third access point may be a legacy AP that is not affiliated with any multi-link device. For example, one of the first access point and the third access point is affiliated with the AP MLD, and the other is the legacy AP. For another example, both the first access point and the third access point are legacy APs.

Optionally, in Case 2, the TDLS setup request frame may also be used to request to set up the third TDLS direct link. For details about a case of the third TDLS direct link, refer to the foregoing description. Details are not described herein again.

Based on the foregoing solution, a plurality of set up links in this application may be of a same link type, or may be of different link types, so that this application is applicable to different scenarios, and has higher flexibility.

In an implementation method, the TDLS setup request frame further includes an MLD MAC address of the first multi-link device, denoted as MAC_I, and the TDLS setup response frame further includes an MLD MAC address of the second multi-link device, denoted as MAC_R. MAC_I and MAC_R are used to generate a TDLS peer key (TDLS peer key, TPK).

Specifically, MAC_I may be carried in a TDLS multi-link element in the TDLS setup request frame, and MAC_R may be carried in a TDLS multi-link element in the TDLS setup response frame.

For example, the TPK may be generated according to the following formula: TPK=KDF-Hash-Length (TPK-Key-Input, "TDLS PMK", min (MAC_I, MAC_R)∥max(MAC_I, MAC_R)∥BSSID1∥BSSID2∥...∥AP MLD MAC). MAC_I and MAC_R are respectively MLD MAC addresses of a TDLS initiator and a TDLS responder. BSSIDx corresponds to a BSSID of a same BSS to which stations at two ends of a basic TDLS direct link x belong, where x is 1, 2, ....

Optionally, in the method 200, a BSS color (color) of each TDLS direct link is determined by the TDLS initiator.

Optionally, before S210, the method 200 further includes: S201: The first multi-link device sends a TDLS discovery request frame to the second multi-link device via the first access point, and correspondingly, the second multi-link device receives the TDLS discovery request frame.

Optionally, before S210 and after S201, the method 200 further includes: S202: The second multi-link device sends a TDLS discovery response frame to the first multi-link device through the first TDLS direct link, and correspondingly, the first multi-link device receives the TDLS discovery response frame.

The TDLS discovery response frame responds to the TDLS discovery request frame.

Optionally, both the TDLS discovery request frame and the TDLS discovery response frame may carry the TDLS multi-link element.

It should be understood that a negotiation process of the communication channel of the second TDLS direct link may be implemented together with the method 200, or may be implemented separately. For example, when Manner 1 of channel negotiation is independently implemented, the method includes the following steps.

S1: The first multi-link device sends the TDLS setup request frame to the second multi-link device via the first access point, and correspondingly, the second multi-link device receives the TDLS setup request frame.

The TDLS setup request frame includes the channel information of the second TDLS direct link, and is used to request to negotiate the channel information of the second TDLS direct link.

S2: The second multi-link device sends the TDLS setup response frame to the first multi-link device via a first access point, and correspondingly, the first multi-link device receives the TDLS setup response frame.

The TDLS setup response frame may carry repeated channel information, or may carry channel information recommended by the second multi-link device.

S3: The first multi-link device sends the TDLS setup confirm frame to the second multi-link device via the first access point, and correspondingly, the second multi-link device receives the TDLS setup confirm frame.

The TDLS setup confirm frame may be used to confirm the channel information of the second TDLS direct link, and the channel information of the second TDLS direct link included in the TDLS setup confirm frame may be the same as or different from the channel information recommended by the second multi-link device.

When Manner 2 of channel negotiation is independently implemented, the method includes the following steps.

S1: The first multi-link device sends the TDLS channel switch request frame to the second multi-link device through the first TDLS direct link, and correspondingly, the second multi-link device receives the TDLS channel switch request frame.

The channel switch request frame includes the channel information of the second TDLS direct link, and further includes the link identifier of the second TDLS direct link. The channel switch request frame is used to negotiate the communication channel of the second TDLS direct link.

S2: The second multi-link device sends the TDLS channel switch response frame to the first multi-link device through the first TDLS direct link, and correspondingly, the first multi-link device receives the TDLS channel switch response frame.

The TDLS channel switch response frame responds to the TDLS channel switch request frame.

For specific descriptions of the first TDLS direct link and the second TDLS direct link, specific descriptions of the TDLS channel switch request frame and the TDLS channel switch response frame, a specific negotiation process of the channel information of the second TDLS direct link, and the like, refer to the method 200. Details are not described herein again.

FIG. 11 is a schematic flowchart of a communication method 300 according to an embodiment of this application. As shown in FIG. 11, the method includes the following steps. The method is applicable to a TDLS power save mechanism.

S310: A first multi-link device sends a first frame to a second multi-link device, and correspondingly, the second multi-link device receives the first frame.

The first frame is used to wake up all or some TDLS direct links between the first multi-link device and the second multi-link device, the TDLS direct link between the first multi-link device and the second multi-link device may be at least one of the first TDLS direct link, the second TDLS direct link, and the third TDLS direct link that are set up in the method 200, or may be another link. This is not limited.

S320: The second multi-link device sends a third frame to the first multi-link device, and correspondingly, the first multi-link device receives the third frame.

The third frame responds to the first frame.

Based on the foregoing solution, in this application, the TDLS direct link between the first multi-link device and the second multi-link device may be woken up through negotiation by using the first frame and the third frame. The TDLS direct link may be all or a part of TDLS direct links between the first multi-link device and the second multi-link device. In this way, when a plurality of TDLS direct link are set up, a power save mechanism can still be supported. This helps the multi-link device save power.

For example, the first frame and the third frame may be respectively a TDLS peer power save management request frame and a TDLS peer power save management response frame. In other words, the method 300 is applicable to a TDLS peer power save mode.

In an implementation, the TDLS peer power save management request frame is used to wake up all TDLS direct links between the first multi-link device and the second multi-link device. In other words, the TDLS peer power save management request frame and the TDLS peer power save management response frame are at an MLD level, without distinguishing between links, and all links between the two devices wake up at the same time.

In this implementation, the TDLS peer power save management request frame further indicates a link referenced by a TSF, and the TSF is used to determine a first awake window of each of all links.

Specifically, the TDLS peer power save management request frame includes an offset (offset) field, the field indicates an offset of a start time of a first awake window relative to a TSF 0, and the TDLS peer power save management request frame may indicate a link referenced by the TSF, that is, a link corresponding to the TSF 0. For example, the link referenced by the TSF is one of all the TDLS direct links between the first multi-link device and the second multi-link device, the second multi-link device may use a TSF of the link as the TSF 0, and a start time of the first awake window is determined based on the offset field.

Optionally, the indication may reuse a link identifier element in the TDLS peer power save management request frame. A format of the link identifier element is shown in FIG. 4. The link referenced by the TSF may be a link corresponding to a BSSID in the link identifier element.

The BSSID field in the link identifier element carried in the TDLS peer power save management request frame may have a same meaning as that in the TDLS peer power save management request frame.

Optionally, the indication may alternatively be implemented by using a newly added field. For example, an MLO link information subelement is newly added to the TDLS peer power save management request frame to indicate a link whose TSF is used as a reference. A format of the MLO link information subelement is shown in FIG. 10.

The TDLS peer power save management request frame may also carry a newly added MLO link information subelement, to negotiate with the first multi-link device about a woken-up link.

In still another implementation, the TDLS peer power save management request frame is used to wake up at least one TDLS direct link between the first multi-link device and the second multi-link device. In other words, the TDLS peer power save management request frame and the TDLS peer power save management response frame are at a link level, and one or more specified links between the first multi-link device and the second multi-link device wake up at a same time.

In an example of this implementation, the TDLS peer power save management request frame includes a link identifier of the at least one woken-up link.

For example, the MLO link information subelement is newly added to the TDLS peer power save management request frame to indicate the link identifier of the at least one woken-up link. A format of the MLO link information subelement is shown in FIG. 10.

The link referenced by the TSF may be a link corresponding to a BSSID in the link identifier element.

The TDLS peer power save management request frame may also carry the newly added MLO link information subelement, to negotiate with the first multi-link device about a woken-up link.

In another example of this implementation, the TDLS peer power save management request frame is used to wake up a fourth TDLS direct link, and the fourth TDLS direct link is a link between the first multi-link device and the second multi-link device.

In this example, the TDLS peer power save management request frame further indicates the fourth TDLS direct link.

In this example, the TDLS peer power save management request frame further indicates that the link referenced by the TSF is the fourth TDLS direct link, and the TSF is used to determine a first awake window of the fourth TDLS direct link.

For example, the fourth TDLS direct link may be indicated by using the BSSID in the link identifier element, and the fourth TDLS direct link is the link referenced by the TSF. In other words, a link corresponding to the BSSID in the link identifier element is also the link referenced by the TSF, the second multi-link device may use the TSF of the link as the TSF 0, and a start time of the first awake window is determined based on the offset field.

The BSSID field in the link identifier element carried in the TDLS peer power save management request frame may have a same meaning as that in the TDLS peer power save management request frame.

In this example, the method 300 may further include: The first multi-link device sends a second frame to the second multi-link device during an awake window of the fourth TDLS direct link, where the second frame is used to wake up at least one link other than the fourth TDLS direct link in all the TDLS direct links.

For example, a 16-bit link bitmap (link Bitmap) may be defined to indicate that at least one link other than the fourth TDLS direct link is requested to be woken up. The link bitmap may be located in a newly defined field, for example, referred to as a wakeup A-control field, and the second frame may carry the wakeup A-control field.

Optionally, in this example, the method 300 may further include: The second multi-link device sends a fourth frame to the first multi-link device during an awake window of the fourth TDLS direct link, where the fourth frame responds to the second frame, and the fourth frame is used to negotiate a link identifier corresponding to a woken-up link.

For example, the fourth frame may also carry the link bitmap.

Optionally, the second frame and the fourth frame may be respectively referred to as a TDLS wakeup request frame and a TDLS wakeup response frame.

Optionally, when the first frame and the third frame may be respectively the TDLS peer power save management request frame and the TDLS peer power save management response frame, the method 300 may further include: After receiving the TDLS peer power save management request frame, the second multi-link device returns an acknowledgement (acknowledgement, ACK) to the first multi-link device. Further, after receiving the TDLS peer power save management response frame, the first multi-link device may return an ACK to the second multi-link device.

For example, the first frame and the third frame may be respectively a TDLS peer traffic indication frame and a TDLS peer traffic response frame. In other words, the method 300 is applicable to a TDLS peer U-APSD mechanism. With reference to a current TDLS peer U-APSD mechanism, the first multi-link device in the method 300 may be referred to as a buffer non-AP MLD, and the second multi-link device may be referred to as a sleep non-AP MLD.

If the first frame and the third frame may be respectively the TDLS peer traffic indication frame and the TDLS peer traffic response frame, that the first multi-link device sends the first frame to the second multi-link device in S310 includes: The first multi-link device sends the first frame to the second multi-link device via the first access point, where both at least one affiliated station of the first multi-link device and at least one affiliated station of the second multi-link device are associated with the first access point.

In an implementation, the TDLS peer traffic indication frame is used to wake up all the TDLS direct links between the first multi-link device and the second multi-link device. In other words, the TDLS peer traffic indication frame and the TDLS peer traffic response frame are at the MLD level, without distinguishing between links, and all links between the two devices wake up.

Specifically, when the sleep non-AP MLD responds with the TDLS peer traffic response frame, it indicates that all links of the sleep non-AP MLD are woken up.

In still another implementation, the TDLS peer traffic indication frame is used to wake up at least one TDLS direct link between the first multi-link device and the second multi-link device. In other words, the TDLS peer traffic indication frame and the TDLS peer traffic response frame are at a link level, and one or more specified links between the first multi-link device and the second multi-link device wake up at a same time.

In an example of this implementation, the TDLS peer traffic indication frame may carry a link identifier of at least one woken-up TDLS direct link. The TDLS peer traffic response frame may also carry the link identifier of the at least one woken-up TDLS direct link, to indicate a link to be woken up through negotiation with the buffer non-AP MLD.

The link identifier of the at least one TDLS direct link may be carried in the MLO link information subelement (as shown in FIG. 10).

Optionally, the TDLS peer traffic indication frame may further carry buffer information, and the buffer information is used to assist two ends of TDLS in negotiating which links are to be woken up. The buffer information may be carried in a buffer report A-Control (buffer report A-control) field, and the buffer report A-control field may be located in a frame header of the TDLS peer traffic indication frame.

In another example of this implementation, the TDLS peer traffic indication frame may implicitly indicate a link identifier of at least one woken-up TDLS direct link.

For example, the TDLS peer traffic indication frame indicates that a first access category AC has buffered data, and there is a mapping relationship between the first access category and the at least one link. The sleep non-AP MLD may determine, based on the mapping relationship, the link identifier of the at least one woken-up link.

That there is the mapping relationship between the first access category and the at least one link may mean that the first access category is mapped to a traffic identifier TID, and the at least one link is mapped to traffic of the TID.

Specifically, a mapping relationship between an AC and a TID defined in a current standard is as follows: A TID 6 and a TID 7 are mapped to AC_VO; a TID 4 and a TID 5 are mapped to AC_VI; a TID 0 and a TID 3 are mapped to AC _BE; and a TID 1 and a TID 2 are mapped to AC_BK. Refer to (b) in FIG. 7. The TPU buffer status information field in the TDLS peer traffic indication frame may indicate which AC has buffered data. Because there is the mapping relationship between the AC and the TID, the AC having buffered data may be mapped to the TID, and the sleep non-AP MLD may wake up, based on information in the TPU buffer status information field, only a link to which a corresponding TID is mapped. For example, if AC_BK in the TPU buffer status information field is set to 1, links corresponding to the TID 1 and the TID 2 are woken up because the TID 1 and the TID 2 are mapped to AC_BK.

Based on the foregoing solution, the first frame can directly wake up all the TDLS direct links between the first multi-link device and the second multi-link device. This is simple and efficient. The first frame may alternatively wake up a specified TDLS direct link between the first multi-link device and the second multi-link device. This helps improve power save effect of the multi-link device.

In the method 200 and the method 300, each TDLS action frame carries a link identifier element (link identifier element), and a format of the link identifier element is shown in FIG. 4. In this application, meanings of a BSSID field, a TDLS initiator station address field, and a TDLS responder station address field in the link identifier element are defined as follows. The following definitions are applicable to each TDLS action frame in the TDLS responder station address field.

BSSID field: When a TDLS initiator station is not affiliated with a non-AP MLD, this field is set to a BSSID of a BSS in which the TDLS initiator station is located. When the TDLS initiator station is affiliated with a non-AP MLD, this field is set to a BSSID corresponding to any uplink/downlink corresponding to a basic TDLS direct link that the non-AP MLD expects to set up. In this application, the TDLS initiator station (STA 1) is affiliated to the first multi-link device. Therefore, the BSSID field is a BSSID corresponding to any uplink/downlink corresponding to a basic TDLS direct link that the first multi-link device expects to set up. For example, the BSSID field is a BSSID corresponding to an uplink/downlink corresponding to the first TDLS direct link.

TDLS initiator station address field: The TDLS initiator station address field is set to a MAC address used when a TDLS initiator is associated with a current AP or AP MLD. When a non-AP MLD is associated with a legacy AP, the non-AP MLD may use a STA address (or referred to as a link address) or an MLD MAC address for association. When a non-AP MLD is associated with an AP MLD, an MLD MAC address of the non-AP MLD is used for association. In this application, the TDLS initiator is the first multi-link device. When the TDLS initiator is associated with the legacy AP, the TDLS initiator station address field is an address used when the first multi-link device is associated with the legacy AP. When the TDLS initiator is associated with the AP MLD, the TDLS initiator station address field is an MLD MAC address of the first multi-link device.

TDLS responder station address field: The TDLS responder station address field is set to a MAC address used when the TDLS responder is associated with the current AP or AP MLD. When a non-AP MLD is associated with a legacy AP, the non-AP MLD may use a STA address (or referred to as a link address) or an MLD MAC address for association. When a non-AP MLD is associated with an AP MLD, an MLD MAC address of the non-AP MLD is used for association. In this application, the TDLS responder is the second multi-link device. When the TDLS responder is associated with the legacy AP, the TDLS responder station address field is an address used when the second multi-link device is associated with the legacy AP. When the TDLS responder is associated with the AP MLD, the TDLS responder station address field is an MLD MAC address of the second multi-link device.

It should be understood that the foregoing methods may be separately implemented, or may be combined with each other. This is not limited. For example, the method 200 and the method 300 may be combined with each other. For example, after performing S210 to S230 in the method 200, the first multi-link device and the second multi-link device set up the first TDLS direct link and the second TDLS direct link. Further, the first multi-link device and the second multi-link device may perform S310 and S320 in the method 300, to enable the TDLS power save mechanism, and wake up at least one TDLS direct link between the first multi-link device and the second multi-link device when necessary.

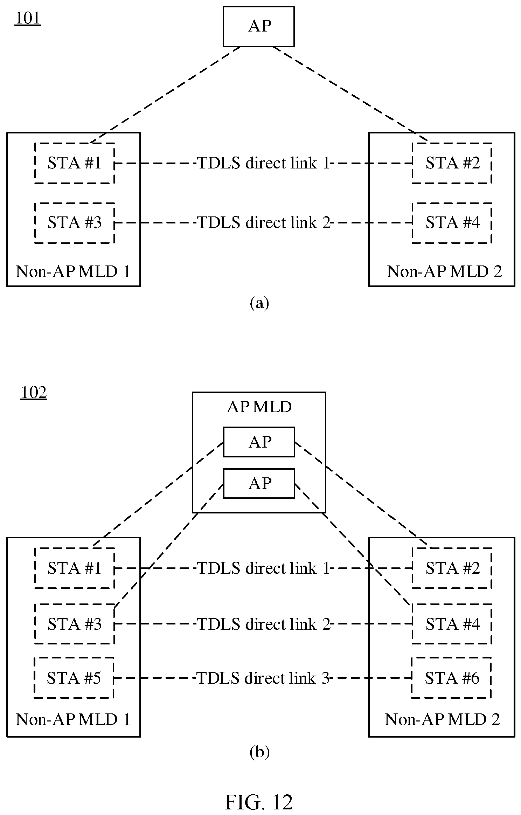

FIG. 12 shows an example of an application scenario applicable to this application. As shown in (a) in FIG. 12, a STA #1 affiliated with a non-AP MLD 1 and a STA #2 affiliated with a non-AP MLD 2 are associated with a same AP, that is, belong to a same BSS. A STA #3 affiliated with the non-AP MLD 1 and a STA #4 affiliated with the non-AP MLD 2 are associated with different APs or are not associated with any AP, that is, do not belong to a same BSS. In the conventional technology, a TDLS direct link 1 may be set up between the non-AP MLD 1 and the non-AP MLD 2, and the TDLS direct link 1 is a direct link between the STA #1 and the STA #2. However, a plurality of TDLS direct links are not considered in the conventional technology. In terms of a capability of the non-AP MLD, a TDLS direct link may also be set up between the STA #3 and the STA #4, to transmit information between the non-AP MLD 1 and the non-AP MLD 2, so as to improve communication efficiency. In this application, a TDLS direct link 2 can be set up between the STA #3 and the STA #4. In other words, in this application, at least two TDLS direct links may be set up between two non-AP MLDs associated with a same AP. In addition, for the non-AP MLD 1 and the non-AP MLD 2 that set up a plurality of TDLS direct links, a TDLS power save mechanism may be further implemented to wake up one or more links.

As shown in (b) in FIG. 12, a STA #1 affiliated with a non-AP MLD 1 and a STA #2 affiliated with a non-AP MLD 2 are associated with a same AP #1, that is, belong to a same BSS. A STA #3 affiliated with the non-AP MLD 1 and a STA #4 affiliated with the non-AP MLD 2 are associated with a same AP #2, that is, belong to a same BSS. The AP #1 and the AP #2 are affiliated with a same AP MLD. In addition, a STA #5 affiliated with the non-AP MLD 1 and a STA #6 affiliated with the non-AP MLD 2 are associated with different APs or are not associated with any AP, that is, do not belong to a same BSS. In the conventional technology, a TDLS direct link 1 may be set up between the non-AP MLD 1 and the non-AP MLD 2, and the TDLS direct link 1 may be a direct link between the STA #1 and the STA #2 (or a direct link between the STA #3 and the STA #4). In other words, in the conventional technology, only a solution of setting up one TDLS direct link is considered, and a solution of setting up a plurality of TDLS direct links is not considered. However, in terms of a capability of the non-AP MLD, a TDLS direct link 2 may also be set up between the STA #3 and the STA #4 (or between the STA #1 and the STA #2), a TDLS direct link 3 may also be set up between the STA #5 and the STA #6, and the link 2 and the link 3 may also be used to transmit information between the non-AP MLD 1 and the non-AP MLD 2. In this application, not only the TDLS direct link 2 can be set up between a non-AP STA 3 and a non-AP STA 4 (or the STA #1 and the STA #2), but also the TDLS direct link 3 can be set up between the STA #5 and the STA #6. In other words, in this application, at least two TDLS direct links may be set up between two non-AP MLDs associated with a same AP MLD. In addition, for the non-AP MLD 1 and the non-AP MLD 2 that set up a plurality of TDLS direct links, a TDLS power save mechanism may be further implemented to wake up one or more links.

It should be understood that a quantity of STAs or APs affiliated with the MLD in FIG. 12 is merely an example, and there may be more or fewer STAs or APs affiliated with the MLD. This is not limited in this application.

It should be understood that, in this application, in a procedure, a same element or field is carried in a request frame (for example, a TDLS setup request frame, a TDLS channel switch request frame, a TDLS peer power save management request frame, or a TDLS peer traffic indication frame), and is also carried in a response frame (for example, a TDLS setup response frame, a TDLS channel switch response frame, a TDLS peer power save management response frame, or a TDLS peer traffic response frame). This means that a requester and a responder negotiate a parameter in the element or field. The element or field in the request frame indicates a parameter that the requester expects to use. If the responder accepts the parameter, the responder may repeat the parameter in the element or the field in the response frame. If the responder does not accept (or rejects) the parameter, the responder may carry a recommended parameter in the element or the field in the response frame. In other words, for a same element or field, specific parameters indicated by the request frame and the response frame may be the same, or may be partially or completely different.

The foregoing describes the foregoing method embodiments in embodiments of this application, and the following briefly describes corresponding apparatus embodiments. It should be understood that descriptions of the apparatus embodiments correspond to the descriptions of the method embodiments. Therefore, for a part that is not described in detail, refer to the foregoing method embodiments.

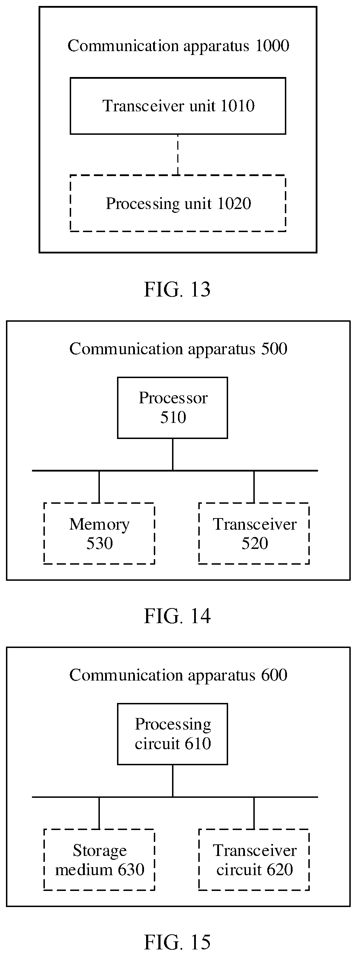

FIG. 13 is a diagram of a communication apparatus according to an embodiment of this application. As shown in FIG. 13, the apparatus 1000 may include a transceiver unit 1010, and the transceiver unit 1010 may communicate with the outside. Optionally, the apparatus 1000 may further include a processing unit 1020, and the processing unit 1020 is configured to perform data/information processing. The transceiver unit 1010 may also be referred to as a communication interface or a communication unit.

In a possible implementation, the apparatus 1000 may be the first multi-link device in the foregoing method 200 or method 300, or may be a chip configured to implement a function of the first multi-link device in the foregoing method 200 or method 300. The apparatus 1000 may implement a procedure performed by the first multi-link device in the foregoing method 200 or method 300. The processing unit 1020 is configured to perform a processing-related operation of the first multi-link device in the foregoing method 200 or method 300, and the transceiver unit 1010 is configured to perform sending/receiving-related operations of the first multi-link device in the method 200 or the method 300.

For example, the transceiver unit 1010 is configured to send a tunneled direct link setup TDLS setup request frame to a first station of a second multi-link device via a first access point, where the TDLS setup request frame is used to request to set up a first TDLS direct link and a second TDLS direct link, and both a first station of the apparatus and the first station of the second multi-link device are associated with the first access point. The transceiver unit 1010 is further configured to receive a TDLS setup response frame from the first station of the second multi-link device via the first access point.

It should be understood that the foregoing content is merely an example for understanding. The apparatus 1000 can further implement other steps, actions, or methods related to the first multi-link device in the method 200 or the method 300. Details are not described herein again.

In another possible implementation, the apparatus 1000 may implement a procedure performed by the second multi-link device in the foregoing method embodiment 200 or 300. The transceiver unit 1010 is configured to perform an operation related to sending and receiving of the second multi-link device in the foregoing method embodiment 200 or 300. The processing unit 1020 is configured to perform an operation related to processing of the second multi-link device in the foregoing method embodiment 200 or 300.

For example, the transceiver unit 1010 receives a TDLS setup request frame from a first station of the first multi-link device via a first access point, where the TDLS setup request frame is used to request to set up a first TDLS direct link and a second TDLS direct link, and both the first station of the first multi-link device and a first station of the apparatus are associated with the first access point. The transceiver unit 1010 is further configured to send a TDLS setup response frame to the first station of the first multi-link device via the first access point.

It should be understood that the foregoing content is merely an example for understanding. The apparatus 1000 can further implement other steps, actions, or methods related to the second multi-link device in the method 200 or the method 300. Details are not described herein again.

It should be understood that the apparatus 1000 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

The apparatus 1000 has a function of implementing corresponding steps performed by the first multi-link device in the foregoing methods, or the apparatus 1000 has a function of implementing corresponding steps performed by the second multi-link device in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter machine, and a receiving unit in the transceiver unit may be replaced by a receiver machine), and another unit, for example, the processing unit, may be replaced by a processor, to separately perform receiving and sending operations and a related processing operation in the method embodiments.

In addition, the transceiver unit may alternatively be a transceiver circuit (for example, may include a receiving circuit and a sending circuit), and the processing unit may be a processing circuit. In this embodiment of this application, the apparatus in FIG. 13 may be the first multi-link device or the second multi-link device in the foregoing embodiments, or may be a chip or a chip system, for example, a system on chip (system on chip, SoC). The transceiver unit may be an input/output circuit or a communication interface. The processing unit is a processor a microprocessor or an integrated circuit integrated on the chip. This is not limited herein.

FIG. 14 is a diagram of another structure of a communication apparatus according to an embodiment of this application. As shown in FIG. 14, the communication apparatus 500 includes at least one processor 510. The processor 510 is coupled to a memory, and is configured to execute instructions stored in the memory, to control a transceiver to send a signal and/or receive a signal. Optionally, the communication apparatus 500 further includes a transceiver 520, configured to send a signal and/or receive a signal. Optionally, the communication apparatus 500 further includes a memory 530, configured to store instructions.

It should be understood that the processor 510 and the memory 530 may be integrated into one processing apparatus. The processor 510 is configured to execute program code stored in the memory 530, to implement the foregoing functions. During specific implementation, the memory 530 may alternatively be integrated into the processor 510, or may be independent of the processor 510.

It should be further understood that the transceiver 520 may include a receiver (which is also referred to as a receiver machine) and a transmitter (which is also referred to as a transmitter machine). The transceiver 520 may further include an antenna. There may be one or more antennas. The transceiver 520 may be a communication interface or an interface circuit.

When the communication apparatus 500 is a chip, the chip includes a transceiver unit and a processing unit. The transceiver unit may be an input/output circuit or a communication interface. The processing unit may be a processor, a microprocessor, or an integrated circuit integrated on the chip.

An embodiment of this application further provides a processing apparatus, including a processor and an interface. The processor may be configured to perform the methods in the foregoing method embodiments.

It should be understood that the processing apparatus may be a chip. For example, the processing apparatus may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

FIG. 15 is a diagram of still another structure of a communication apparatus according to an embodiment of this application. As shown in FIG. 15, the apparatus 600 includes a processing circuit 610. The processing circuit 610 is configured to execute instructions, to implement the methods in the foregoing embodiments.

Optionally, the apparatus 600 may further include a transceiver circuit 620. The transceiver circuit 620 is configured to send a signal and/or receive a signal. The processing circuit 610 and the transceiver circuit 620 communicate with each other through an internal connection path, to control the transceiver circuit 620 to send a signal and/or receive a signal.

Optionally, the apparatus 600 may further include a storage medium 630. The storage medium 630 communicates with the processing circuit 610 and the transceiver circuit 620 through an internal connection path. The storage medium 630 is configured to store instructions, and the processing circuit 610 may execute the instructions stored in the storage medium 630.

In a possible implementation, the apparatus 600 is configured to implement a procedure corresponding to the first multi-link device in the foregoing method embodiments.

In another possible implementation, the apparatus 600 is configured to implement a procedure corresponding to the second multi-link device in the foregoing method embodiments.

According to the methods provided in embodiments of this application, this application further provides a computer program product. The computer program product includes computer program code, and the computer program code is used to implement the methods in the foregoing method embodiments of this application. In other words, when the computer program code is run on a computer, the computer is enabled to perform the methods in the foregoing method embodiments of this application.

According to the methods provided in embodiments of this application, this application further provides a computer-readable medium. The computer-readable medium stores program code, and the computer program code is used to implement the methods in the foregoing method embodiments of this application. In other words, when the program code is run on a computer, the computer is enabled to perform the methods in the foregoing method embodiments.

According to the method provided in embodiments of this application, this application further provides a system, including the foregoing first multi-link device and/or second multi-link device.

The term "at least one of..." in this specification represents all or any combination of the listed items. For example, "at least one of A, B, and C" may represent the following six cases: Only A exists, only B exists, only C exists, both A and B exist, both B and C exist, and A, B, and C all exist. In this specification, "at least one" means one or more. "A plurality of" means two or more.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that in embodiments of this application, "B corresponding to A" indicates that B is associated with A, and B may be determined based on A. However, it should be further understood that determining B based on A does not mean that B is determined based on only A. B may alternatively be determined based on A and/or other information. Terms "include", "contain", "have", and their variants all mean "include but are not limited to", unless otherwise specifically emphasized in another manner.

It should be understood that, in various embodiments of this application, first, second, and various numbers are merely for differentiation for ease of description, and are not for limiting the scope of embodiments of this application. For example, different information is differentiated.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or the communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computing device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending, by a first station of a first multi-link device, a tunneled direct link setup TDLS setup request frame to a first station of a second multi-link device via a first access point, wherein the TDLS setup request frame is used to request to set up a first TDLS direct link and a second TDLS direct link, and both the first station of the first multi-link device and the first station of the second multi-link device are associated with the first access point; and
receiving, by the first station of the first multi-link device, a TDLS setup response frame from the first station of the second multi-link device via the first access point.

2. The method according to claim 1, wherein the first TDLS direct link is a direct link between the first station of the first multi-link device and the first station of the second multi-link device, the second TDLS direct link is a direct link between a second station of the first multi-link device and a second station of the second multi-link device, and the second station of the first multi-link device and the second station of the second multi-link device are associated with different access points or are not associated with any access point.

3. The method according to claim 1 or 2, wherein the method further comprises:
indicating, by the first station of the first multi-link device, a link identifier of the first TDLS direct link and a link identifier of the second TDLS direct link to the first station of the second multi-link device via the first access point.

4. The method according to any one of claims 1 to 3, wherein the TDLS setup request frame comprises an address of an AP associated with the first station of the first multi-link device and an address of an AP associated with the second station of the first multi-link device.

5. The method according to any one of claims 1 to 4, wherein the TDLS setup request frame further indicates channel information of the second TDLS direct link, and the channel information comprises at least one of the following: an operating class, a channel number, channel bandwidth, a channel center frequency segment 0, a channel center frequency segment 1, or a channel puncture bitmap.

6. The method according to any one of claims 1 to 5, wherein the method further comprises:
sending, by the first multi-link device, a TDLS channel switch request frame to the second multi-link device through the first TDLS direct link, wherein the channel switch request frame comprises link identifier information of the second TDLS direct link.

7. The method according to any one of claims 1 to 6, wherein a timing synchronization function TSF of the second TDLS direct link is the same as a TSF of the first TDLS direct link.

8. The method according to any one of claims 1 to 7, wherein the method further comprises:
sending, by the first multi-link device, a first frame to the second multi-link device, wherein the first frame is used to wake up at least one of all TDLS direct links between the first multi-link device and the second multi-link device, and all the TDLS direct links comprise the first TDLS direct link and the second TDLS direct link.

9. The method according to claim 8, wherein the first frame comprises a link identifier of the at least one link.

10. The method according to claim 8, wherein the first frame further indicates that a first access category AC has buffered data, and there is a mapping relationship between the first access category and the at least one link.

11. The method according to claim 10, wherein that there is the mapping relationship between the first access category and the at least one link comprises:
the first access category is mapped to a traffic identifier TID, and the at least one link is mapped to traffic of the TID.

12. The method according to claim 8, wherein the first frame is used to wake up a fourth TDLS direct link, and the fourth TDLS direct link is one of all the TDLS direct links.

13. The method according to claim 12, wherein the method further comprises:
sending, by the first multi-link device, a second frame to the second multi-link device during an awake window of the fourth TDLS direct link, wherein the second frame is used to wake up at least one link other than the fourth TDLS direct link in all the TDLS direct links.

14. A communication method, comprising:
receiving, by a first station of a second multi-link device, a TDLS setup request frame from a first station of a first multi-link device via a first access point, wherein the TDLS setup request frame is used to request to set up a first TDLS direct link and a second TDLS direct link, and both the first station of the first multi-link device and the first station of the second multi-link device are associated with the first access point; and
sending, by the first station of the second multi-link device, a TDLS setup response frame to the first station of the first multi-link device via the first access point.

15. The method according to claim 14, wherein the first TDLS direct link is a direct link between the first station of the first multi-link device and the first station of the second multi-link device, the second TDLS direct link is a direct link between a second station of the first multi-link device and a second station of the second multi-link device, and the second station of the first multi-link device and the second station of the second multi-link device are associated with different access points or are not associated with any access point.

16. The method according to claim 14 or 15, wherein the method further comprises:
receiving, by the first station of the second multi-link device, a link identifier of the first TDLS direct link and a link identifier of the second TDLS direct link from the first station of the first multi-link device via the first access point.

17. The method according to any one of claims 14 to 16, wherein the TDLS setup response frame comprises an address of an AP associated with the first station of the second multi-link device and an address of an AP associated with the second station of the second multi-link device.

18. The method according to any one of claims 14 to 17, wherein the TDLS setup request frame further indicates channel information of the second TDLS direct link, and the channel information comprises at least one of the following: an operating class, a channel number, channel bandwidth, a channel center frequency segment 0, a channel center frequency segment 1, and a channel puncture bitmap.

19. The method according to any one of claims 14 to 18, wherein the method further comprises:
receiving, by the second multi-link device, a TDLS channel switch request frame from the first multi-link device through the first TDLS direct link, wherein the channel switch request frame comprises link identifier information of the second TDLS direct link.

20. The method according to any one of claims 14 to 19, wherein a timing synchronization function TSF of the second TDLS direct link is the same as a TSF of the first TDLS direct link.

21. The method according to any one of claims 14 to 20, wherein the method further comprises:
receiving, by the second multi-link device, a first frame from the first multi-link device, wherein the first frame is used to wake up at least one of all TDLS direct links between the first multi-link device and the second multi-link device, and all the TDLS direct links comprise the first TDLS direct link and the second TDLS direct link.

22. The method according to claim 21, wherein the first frame further comprises a link identifier of the at least one woken-up link.

23. The method according to claim 21, wherein the first frame further indicates that a first access category AC has buffered data, there is a mapping relationship between the first access category and the at least one link, and the method further comprises:
determining, by the second multi-link device, the at least one link based on the first frame.

24. The method according to claim 23, wherein that there is the mapping relationship between the first access category and the at least one link comprises:
the first access category is mapped to a traffic identifier TID, and the at least one link is mapped to traffic of the TID.

25. The method according to claim 21, wherein the first frame is used to wake up a fourth TDLS direct link, and the fourth TDLS direct link is one of all the TDLS direct links.

26. The method according to claim 25, wherein the method further comprises:
receiving, by the second multi-link device, a second frame from the first multi-link device through the fourth TDLS direct link, wherein the second frame is used to wake up at least one link other than the fourth TDLS direct link in all the TDLS direct links.

27. A communication apparatus, comprising a unit or module configured to implement the method according to any one of claims 1 to 13, or a unit or module configured to implement the method according to any one of claims 14 to 26.

28. A communication apparatus, comprising a processor coupled to a memory, wherein the memory is configured to store a computer program, and the processor is configured to run the computer program, so that the communication apparatus performs the method according to any one of claims 1 to 13, or performs the method according to any one of claims 14 to 26.

29. A computer-readable storage medium, configured to store a computer program, wherein the computer program comprises instructions for implementing the method according to any one of claims 1 to 13, or comprises instructions for implementing the method according to any one of claims 14 to 26.

30. A chip, comprising a processor and an interface, configured to invoke, from a memory, a computer program stored in the memory and run the computer program, to perform the method according to any one of claims 1 to 13, or perform the method according to any one of claims 14 to 26.
